# EUROPÄISCHE PATENTSCHRIFT

(11) **EP 2 516 971 B1**
(45) Veröffentlichungstag und Bekanntmachung des Hinweises auf die Patenterteilung: **04.03.2020**
(21) Anmeldenummer: 10779827.4
(22) Anmeldetag: 25.11.2010
(51) Int. Cl.: G01F 1/84

(54) **MESSAUFNEHMER VOM VIBRATIONSTYP SOWIE DAMIT GEBILDETES MESSSYSTEM**
VIBRATION-TYPE MEASURING SENSOR AND MEASURING SYSTEM FORMED THEREWITH
CAPTEUR DE MESURE DU TYPE À VIBRATION ET SYSTÈME DE MESURE LE COMPRENANT

(30) Priorität: 20.08.2010 DE 102010039627; 21.12.2009 DE 102009055069
(43) Veröffentlichungstag der Anmeldung: 31.10.2012
(60) Teilanmeldung: 19208439.0
(73) Patentinhaber: Endress+Hauser Flowtec AG, 4153 Reinach (CH)
(72) Erfinder: HUBER, Christof, CH-3007 Bern (CH); BITTO, Ennio, CH-4147 Aesch (BL) (CH); BRAUN, Marcel, 79594 Inzlingen (DE); RIEDER, Alfred, 84032 Landshut (DE); SCHÜTZE, Christian, CH-4055 Basel (BS) (CH)
(74) Vertreter: Andres, Angelika Maria
(86) Internationale Anmeldenummer: PCT/EP2010/068251
(87) Internationale Veröffentlichungsnummer: WO 2011/085852

(56) Entgegenhaltungen:
- WO-A2-96/08697
- DE-A1-102004 035 971
- DE-A1-102009 001 472
- US-A- 4 879 910
- US-A- 5 230 254

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums. Ferner betrifft die Erfindung ein, etwa als In-line-Meßgerät ausgebildetes, Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien, etwa einer wässrigen Flüssigkeit, einem Gas, einem Flüssigkeits-Gas-Gemisch, einem Dampf, einem Öl, einer Paste, einem Schlamm oder einem anderen strömungsfähigen Stoff, oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 47 93 191, der US-A 2002/0157479, der US-A 2006/0150750, der US-A 2007/0151368, der US-A 53 70 002, der US-A 57 96 011, der US-B 63 08 580, der US-B 64 15 668, der US-B 67 11 958, der US-B 69 20 798, der US-B 71 34 347, der US-B 73 92 709, der WO-A 96/08697 oder der WO-A 03/027616 der ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen von zumindest zeitweise strömendem, ggf. auch extrem heißem, Medium umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die beiden Meßrohre im Nutzmode zumindest anteilig, insb. auch überwiegend, zu gegengleichen Biegeschwingungen differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungssignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der zwei Meßrohre gebildete Rohranordnung mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz der Rohranordnung gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer Nutz-Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gebogener Meßrohre entspricht dabei die Länge eines zwischen dem einlaßseitigem und dem auslaßseitigen Kopplerelement verlaufenden Abschnitts einer Biegelinie des jeweiligen Meßrohrs, mithin einer die Flächenschwerpunkte aller gedachten Querschnittsflächen des jeweiligen Meßrohrs verbindende gedachte Mittelllinie des nämlichen Meßrohrs, der Nutz-Schwinglänge der Meßrohre. Mittels der - insoweit mit zur Rohranordnung gehörigen - Kopplerelementen kann zudem auch eine Schwingungsgüte der Rohranordnung wie auch die Empfindlichkeit des Meßaufnehmers insgesamt beeinflußt werden, in der Weise, daß für eine minimal geforderte Empfindlichkeit des Meßaufnehmers zumindest eine minimale Nutz-Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann.

Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 1000 t/h jeweils für Druckverluste von weniger als 3 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 1500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, der WO-A 96/08697 oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Ausgehend vom oben genannten Stand der Technik besteht daher eine Aufgabe der Erfindung darin, einen Meßaufnehmer von hoher Empfindlichkeit und Schwingungsgüte anzugeben, der auch bei großen Massendurchflußraten von mehr als 1000 t/h einen geringen Druckverlust von möglichst weniger als 3 bar verursacht, und der auch mit großer nomineller Nennweite von über 100 mm eine möglichst kompakter Bauweise aufweist und nicht zuletzt auch für Anwendungen mit extrem heißen bzw. extrem kalten Medien und/oder mit signifikant schwankenden Mediumstemperaturen geeignet ist.

Zur Lösung der Aufgabe besteht die Erfindung in einem Meßaufnehmer gemäß dem unabhängigen Anspruch 1.

Ein Grundgedanke der Erfindung besteht darin, anstelle der bei konventionellen Meßaufnehmern großer Nennweite üblicherweise verwendeten Rohranordnungen mit zwei parallel durchströmten Meßrohren Rohranordnungen mit vier parallel durchströmte, beispielsweise V-förmig oder kreisbogenförmig, gebogene Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 1000 t/h, gewährleisten zu können. Darüber hinaus kann der sich aus dem Gesamtquerschnitt der vier Meßrohre ergebende effektive Strömungsquerschnitt der Rohranordnung im Vergleich zu herkömmlichen nur zwei Meßrohre aufweisenden Meßaufnehmern gleicher nomineller Nennweite und gleicher Leermasse ohne weiteres um mehr als 20% erhöht werden.

Ein Vorteil der Erfindung besteht zudem u.a. darin, daß durch die Verwendung gebogener Meßrohre dauerhafte mechanische Spannungen, beispielsweise infolge thermisch bedingter Ausdehnung der Meßrohre oder infolge von seitens der Rohranordnung in den Meßaufnehmer eingetragener Einspannkräfte, innerhalb der Rohranordnung weitgehend vermieden oder zumindest sehr niedrig gehalten und damit einhergehend die Meßgenauigkeit wie auch die strukturelle Integrität des jeweiligen Meßaufnehmers auch bei extrem heißen Medien bzw. zeitlich stark schwankenden Temperaturgradienten innerhalb der Rohranordnung sicher erhalten werden. Darüberhinaus können aufgrund der Symmetrieeigenschaften der Rohranordnung auch jene durch Biegeschwingungen gebogener Meßrohre Querkräfte weitgehend neutralisiert werden, die - wie u.a. in den eingangs erwähnten EP-A 1 248 084 und US-B 73 50 421 diskutiert - im wesentlich senkrecht zu den Längsschnittebenen des jeweiligen Meßaufnehmers bzw. dessen Rohranordnung wirken und für die Meßgenauigkeit von Meßaufnehmern vom Vibrationstyp durchaus schädlich sein können. Zudem konnte bei Meßaufnehmern der vorgenannten Art im Vergleich zu konventionellen Meßaufnehmern mit nur einem oder zwei gebogenen Meßrohren eine erhöhte Schwingungsgüte des Meßaufnehmers insgesamt, dies nicht zuletzt auch infolge einer erheblich geringer ausfallenden Dissipation von Schwingungsenergie aus dem Meßaufnehmer in die daran angeschlossene Rohrleitung, etwa infolge von eigentlich unerwünschten Deformationen der Strömungsteiler, festgestellt werden. Darüberhinaus weisen die Schwingungen der Meßrohre von Meßaufnehmern gemäß der vorliegenden Erfindung auch eine - im Vergleich zu herkömmlichen Meßaufnehmer - erheblich verringerte Druckstoß- bzw. Schallabhängigkeit auf.

Ein weiterer Vorteil des erfindungsgemäßen Meßaufnehmers ist ferner auch darin zu sehen, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher besonders zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 1000 t/h sind, insb. zumindest zeitweise mehr als 1500 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fign. 1, 2: ein, beispielsweise als Coriolis-Durchfluss/DichteNiskositäts-Meßgerät dienendes, In-Line-Meßgerät in perspektivischen, teilweise auch geschnittenen, Seitenansichten;
- Fign. 3a, b: eine Projektion des In-line-Meßgerät gemäß Fig. 1 in zwei verschiedenen Seitenansichten;
- Fig. 4a: in perspektivischer Seitenansicht einen Meßaufnehmer vom Vibrationstyp mit einer mittels vier gebogenen Meßrohren gebildeten Rohranordnung, eingebaut in ein In-line-Meßgerät gemäß Fig. 1;
- Fig. 4b: in perspektivischer Seitenansicht die Rohranordnung gemäß Fig. 4a;
- Fign. 5a, b: eine Projektion des Meßaufnehmers gemäß Fig. 4a in zwei verschiedenen Seitenansichten;
- Fign. 6a, b: Projektionen einer Rohranordnung gemäß Fig. 4b zwei verschiedenen Seitenansichten; und
- Fign. 7a, b: schematisch Schwingungsmoden (V-Mode; X-Mode) einer Rohranordnung gemäß Fig. 4b, jeweils in Projektion auf eine gedachte Querschnittsebene nämlicher Rohranordnung.

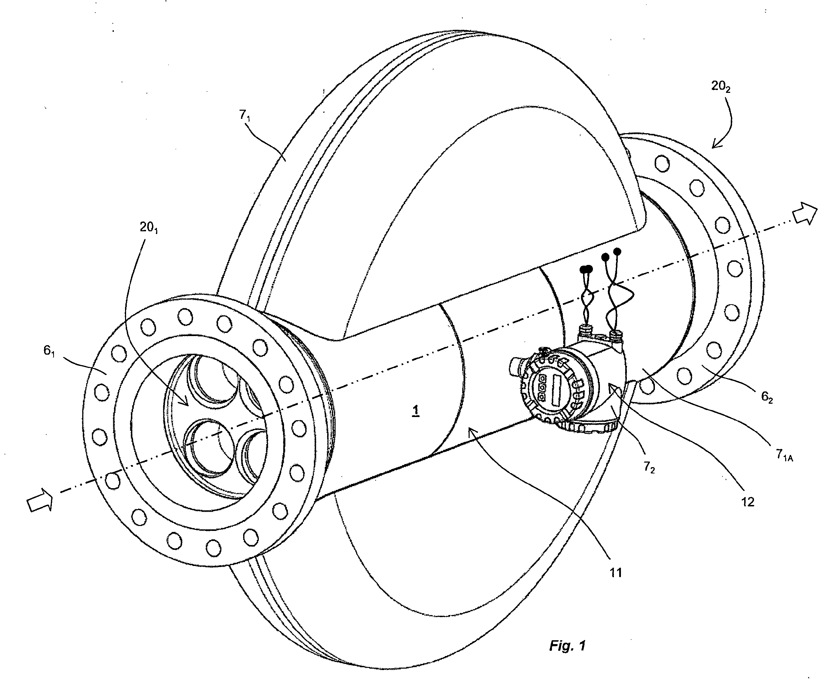

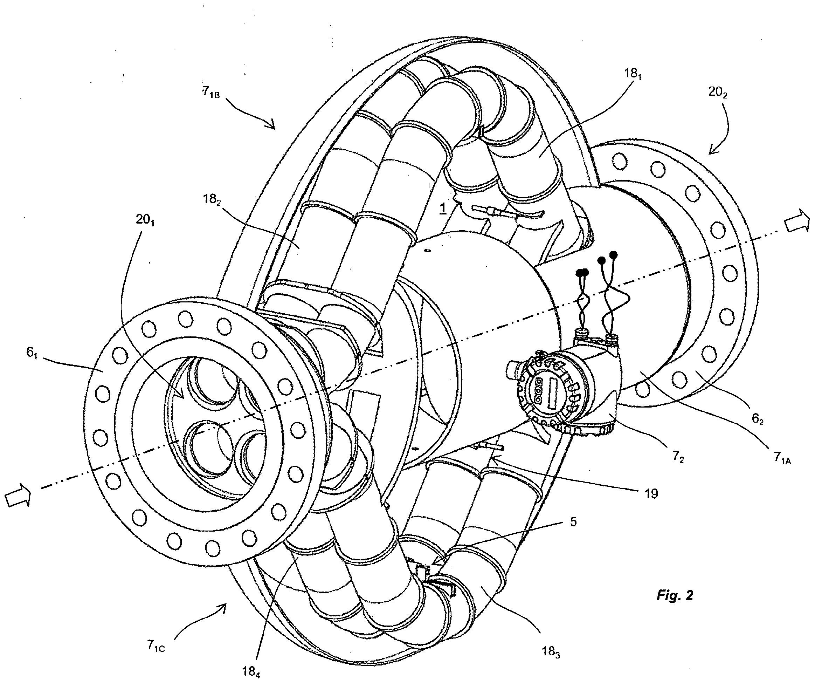

In den Fig. 1, 2 ist ein, insb. als Coriolis-Massedurchfluß- und/oder Dichte-Meßgerät ausgebildetes, Meßsystem 1 schematisch dargestellt, das im nicht zuletzt dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte ρ und/oder eine Viskosität η des Mediums zu messen. Im besonderen ist das Meßsystem 1 dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Nicht zuletzt ist das In-Line-Meßgerät auch dafür vorgesehen strömende Medien der vorgenannten Art zu messen, die mit einer Massendurchflußrate von größer als 1000 t/h, insb. von größer 1500 t/h, strömen gelassen sind.

Das - hier als In-Line-Meßgerät, nämlich in den Verlauf der Rohrleitung einsetzbares Meßgerät, in Kompaktbauweise gezeigte - Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen dargestellte - Umformer-Elektronik 12 zum Ansteuern des Meßaufnehmers und zum Auswerten von vom Meßaufnehmer gelieferten Schwingungssignalen. In vorteilhafter Weise kann die, beispielsweise mittels einem oder mehreren Mikroprozessoren und/oder mittels eines oder mehreren digitalen Signalprozessoren gebildete Umformer-Elektronik 12 z.B. so ausgelegt sein, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 so ausgelegt sein, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, kann die, beispielsweise auch vor Ort und/oder via Kommunikationssystem reprogrammierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

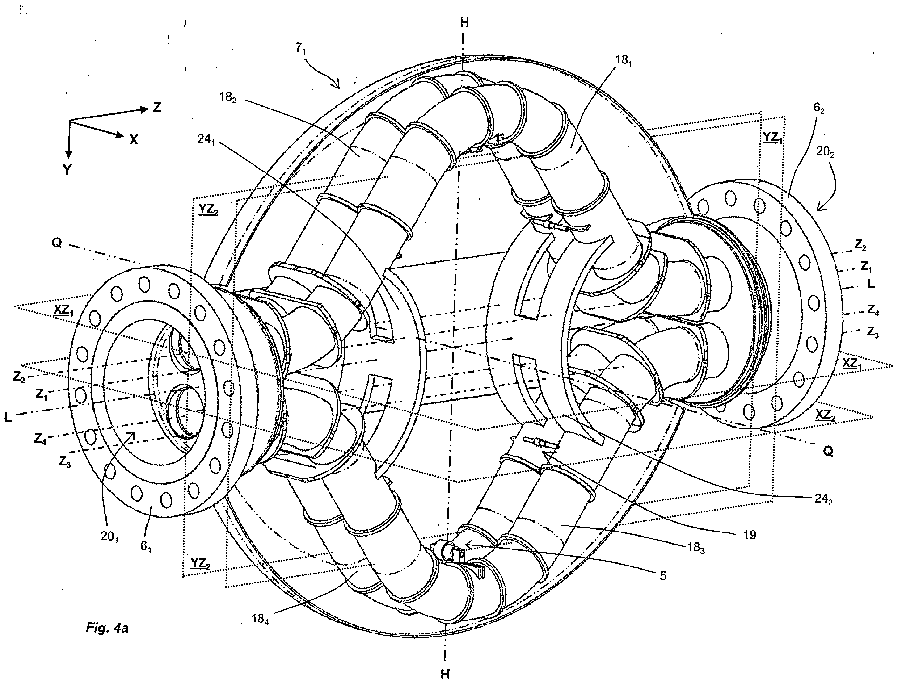

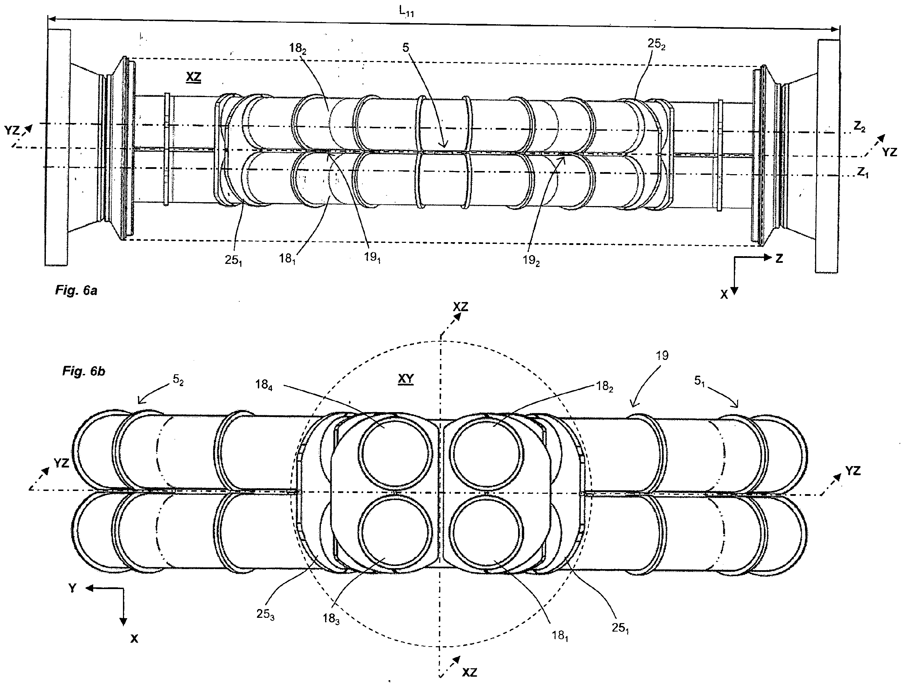

In den Fig. 4a, 4b, 5a, 5b, 6a, 6b ist in unterschiedlichen Darstellungen ein Ausführungsbeispiel für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. die m Massendurchflußrate, mithin der Massendurchfluß, und/oder die Dichte und/oder die Viskosität des Mediums gemessen werden.

Der Meßaufnehmer 11 weist ein - hier teilweise im wesentlichen rohrförmiges, mithin auch außen teilweise kreiszylindrisches - Aufnehmer-Gehäuse 7₁ auf, in dem weitere, dem Erfassen der wenigstens einen Meßgröße dienende Komponenten des Meßaufnehmers 11 vor äußeren Umwelteinflüssen, mithin Staub oder Spritzwasser oder auch allfällig auf den Meßaufnehmer von außen einwirkenden Kräften etc., geschützt untergebracht sind. Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1c}, 20_{1D} bzw. 20_{2A}, 20_{2B}, 20_{2C}, 20_{2D} auf. Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht. Infolge der für den Meßaufnehmer im besondern angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4a ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem - nicht zuletzt auch bei angestrebt hohen Massendurchflußraten von über 1000 t/h - sind nach einer anderen Ausgestaltung der Erfindung die Einbaulänge und die nominelle Nennweite des Meßaufnehmers aufeinander abgestimmt so bemessen, daß ein Nennweite-zu-Einbaulänge-Verhältnis D₁₁/L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist. Im hier gezeigten Ausführungsbeispiel ist zumindest ein Mittelsegment 7_{1A} des Aufnehmer-Gehäuses 7₁ mittels eines geraden - hier auch kreiszylindrischen und zunächst dreiteiligen - Rohres gebildet, so daß zur Fertigung des Aufnehmer-Gehäuses 7₁ beispielsweise auch standardisierte, mithin kostengünstige, geschweißte oder gegossenen Standardrohre, beispielsweise aus Stahlguß oder geschmiedetem Stahl, verwendet werden können. Wie aus der Zusammenschau der Fig. 1 und 2 ferner ohne weiteres ersichtlich, kann das Mittelsegment 7_{1A} des Aufnehmer-Gehäuses 7₁ hierbei beispielsweise auch mittels eines in etwa das Kaliber der anzuschließenden Rohrleitung aufweisenden, mithin mit einer nominellen Nennweite D₁₁ des Meßaufnehmers korrespondierenden, Rohrs gebildet sein, insb. einem hinsichtlich Kaliber, Wandstärke und Material der anzuschließenden Rohrleitung entsprechenden und insoweit auch hinsichtlich des erlaubten Betriebsdrucks entsprechend angepaßten Rohr. Nicht zuletzt für den Fall, daß das rohrförmige Mittelsegment wie auch die mit dem jeweiligen Flansch verbundenen Strömungsteiler im Vor- bzw. Auslaufbereich jeweils den gleichen Innendurchmesser aufweisen, kann das Aufnehmer-Gehäuses zudem auch in der Weise gebildet werden, daß an die Enden des das Mittelsegment bildenden Rrohrs die Flansche angeformt oder angeschweißt sind, und daß die Strömungsteiler mittels, insb. von den Flanschen etwas beabstandet, an die Innenwand orbital und/oder mittels Laser angeschweißten, die Strömungsöffnungen aufweisenden Platten gebildet sind.

Zum Führen des zumindest zeitweise durch Rohrleitung und Meßaufnehmer strömenden Mediums umfaßt der erfindungsgemäße Meßaufnehmer ferner eine Rohranordnung mit genau vier im Aufnehmer-Gehäuse 10 schwingfähig gehalterte gebogene, beispielsweise zumindest abschnittsweise kreisbogenförmige und/oder - wie hier schematisch dargestellt - zumindest abschnittsweise V-förmige, Meßrohre 18₁, 18₂, 18₃, 18₄. Die vier-hier gleichlangen sowie paarweise parallelen - Meßrohre kommunizieren jeweils mit der an den Meßaufnehmer angeschlossenen Rohrleitung und werden im Betrieb zumindest zeitweise, insb. auch simultan, in wenigstens einem für Ermittlung der physikalischen Meßgröße geeigneten, aktiv angeregten Schwingungsmode - dem sogenannten Nutzmode - vibrieren gelassen. Von den vier Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ - hier nämlich an dessen Mittelsegment 7_{1A} - schwingfähig gehaltert sind. Als Material für die Rohrwände der Meßrohre eignet sich beispielsweise rostfreier, ggf. auch hochfester, Edelstahl, Titan, Zirkonium oder Tantal bzw. damit gebildete Legierungen oder auch Superlegierungen, wie etwa Hastelloy, Inconel etc.. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Alternativ oder in Ergänzung sind nach einer weiteren Ausgestaltung der Erfindung zumindest das erste und das zweite Meßrohr 18₁, 18₂ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Vorzugsweise sind die vier Meßrohre 18₁, 18₂, 18₃, 18₄ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, baugleich realisiert, insb. derart, daß im Ergebnis zumindest eine minimale Biegeschwingungs-Resonanzfrequenz jedes der vier - leeren oder gleichmäßig von einem homogenen Medium durchströmten - Meßrohre 18₁, 18₂, 18₃, 18₄ im wesentlichen gleich den jeweiligen minimalen Biegeschwingungs-Resonanzfrequenzen der verbleibenden anderen Meßrohre ist.

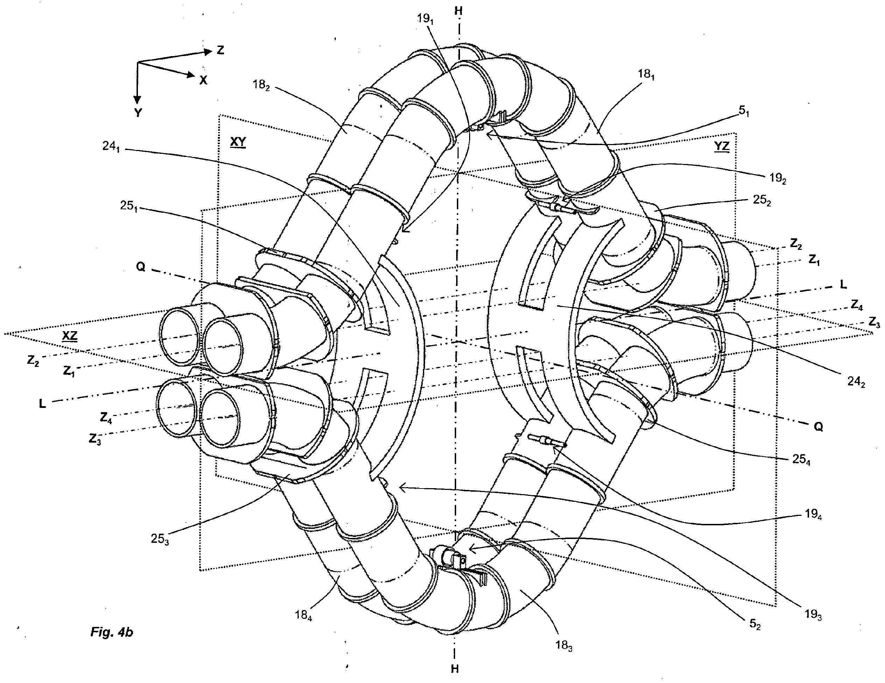

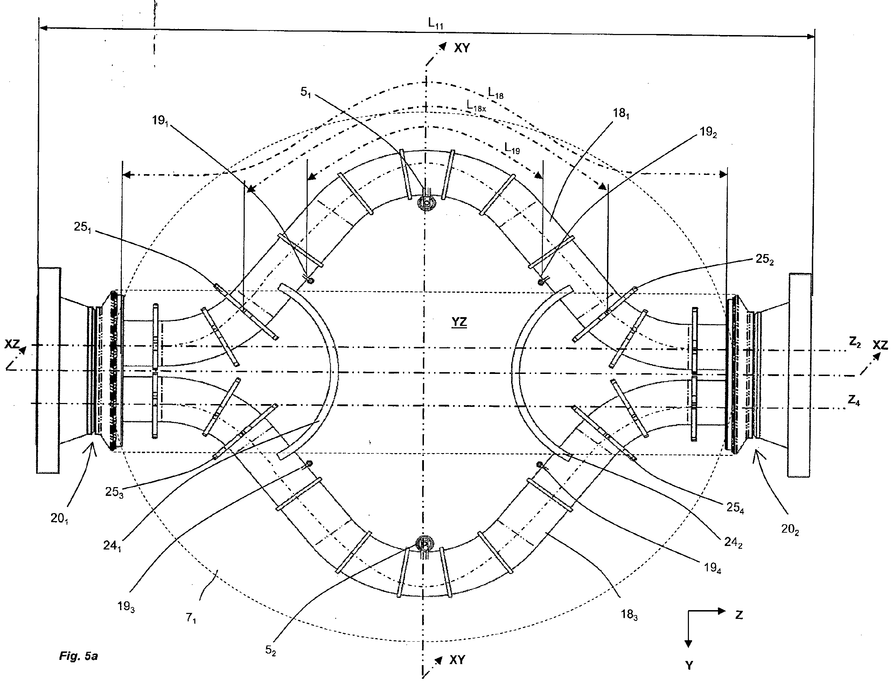

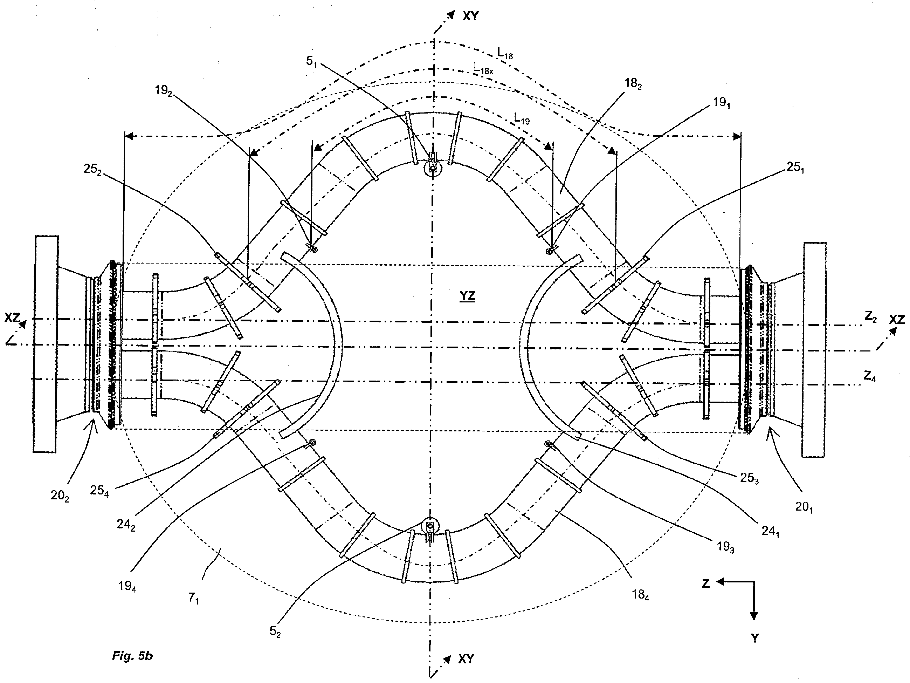

Beim erfindungsgemäßen Meßaufnehmer sind die Meßrohre - wie auch aus der Zusammenschau der Fig. 2, 4a und 4b ohne weiteres ersichtlich - ferner so ausgebildet und im Meßaufnehmer angeordnet, daß die Rohranordnung eine sowohl zwischen dem ersten Meßrohr 18₁ und dem dritten Meßrohr 18₃ als auch zwischen dem zweiten Meßrohr 18₂ und dem vierten Meßrohr 18₄ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem ersten Meßrohr 18₁ und zweiten Meßrohr 18₂ als auch zwischen dem dritten Meßrohr 18₃ und vierten Meßrohr 18₄ verlaufende zweite gedachte Längsschnittebene YZ aufweist, bezüglich der die Rohranordnung gleichfalls spiegelsymmetrisch ist. Im Ergebnis dessen sind nicht nur durch allfällige thermisch bedingte Ausdehnung der Meßrohre innerhalb der Rohranordnung generierte mechanische Spannungen minimiert, sondern können auch durch die Biegeschwingungen der gebogenen Meßrohre innerhalb der Rohranordnung allfällig induzierte, im wesentlichen senkrecht zur Schnittlinie der beiden vorgenannten gedachten Längsschnittebenen wirkende Querkräfte weitgehend neutralisiert werden, nicht zuletzt auch jene, u.a. auch in den eingangs erwähnten EP-A 1 248 084 und US-B 73 50 421 erwähnten, Querkräfte, die im wesentlichen senkrecht zur ersten gedachten Längsschnittebene XZ gerichtet sind. Wie nicht zuletzt auch aus den Fig. 4a, 4b, 5a, 5b ersichtlich, weist im hier gezeigten Ausführungsbeispiel jedes der vier Meßrohre jeweils einen Meßrohr-Scheitelpunkt, definiert als größter senkrechter Abstand des jeweiligen Meßrohres von der ersten gedachten Längsschnittebene XZ, auf. Im übrigen weist die die Rohranordnung, wie auch aus der Zusammenschau der Fig. 4a-6b ohne weiteres ersichtlich, eine sowohl zur ersten gedachten Längsschnittebene XZ als auch zur zweiten gedachten Längsschnittebene YZ jeweils senkrechte gedachte Querschnittebene XY auf. Gemäß einer vorteilhaften Ausgestaltung der Erfindung ist die Rohranordnung ferner so ausgebildet, daß ein Massenschwerpunkt der Rohranordnung in der gedachten Querschnittsebene XY liegt bzw. daß die Rohranordnung bezüglich der gedachten Querschnittsebene XY spiegelsymmetrisch ist, etwa derart, daß die gedachte Querschnittsebene XY jedes der vier Meßrohre in dessen jeweiligen Meßrohr-Scheitelpunkt schneidet.

Zur weiteren Symmetrisierung des Meßaufnehmers und insoweit auch zur weiteren Vereinfachung von dessen Aufbau sind die beiden Strömungsteiler 20₁, 20₂ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung 20_{1A} des ersten Strömungsteilers 20₁ mit der ersten Strömungsöffnung 20_{2A} des zweiten Strömungsteilers 20₂ imaginär verbindende gedachte erste Verbindungsachse Z₁ des Meßaufnehmers parallel zu einer die zweite Strömungsöffnung 20_{1B} des ersten Strömungsteilers 20₁ mit der zweiten Strömungsöffnung 20_{2B} des zweiten Strömungsteilers 20₂ imaginär verbindende gedachten zweiten Verbindungsachse Z₂ des Meßaufnehmers verläuft, und daß eine die dritte Strömungsöffnung 20_{1C} des ersten Strömungsteilers 20₁ mit der dritten Strömungsöffnung 20_{2C} des zweiten Strömungsteilers 20₂ imaginär verbindende gedachte dritten Verbindungsachse Z₃ des Meßaufnehmers parallel zu einer die vierte Strömungsöffnung 20_{1D} des ersten Strömungsteilers 20₁ mit der vierten Strömungsöffnung 20_{2B} des zweiten Strömungsteilers 20₂ imaginär verbindende gedachten vierten Verbindungsachse Z₄ des Meßaufnehmers verläuft. Wie in der Fig. 4a und 4b gezeigte, sind die Strömungsteiler ferner so ausgebildet und im Meßaufnehmer so angeordnet, daß die Verbindungsachsen Z₁, Z₂, Z₃, Z₄ auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler 20₁, 20₂ zudem auch so ausgebildet und so im Meßaufnehmer angeordnet sein, daß eine erste gedachte Längsschnittebene XZ₁ des Meßaufnehmers, innerhalb der die erste gedachte Verbindungsachse Z₁ und die zweite gedachte Verbindungsachse Z₂ verlaufen, parallel zu einer zweiten gedachten Längsschnittebene XZ₂ des Meßaufnehmers ist, innerhalb der die gedachte dritte Verbindungsachse Z₃ und die gedachte vierte Verbindungsachse Z₄ verlaufen.

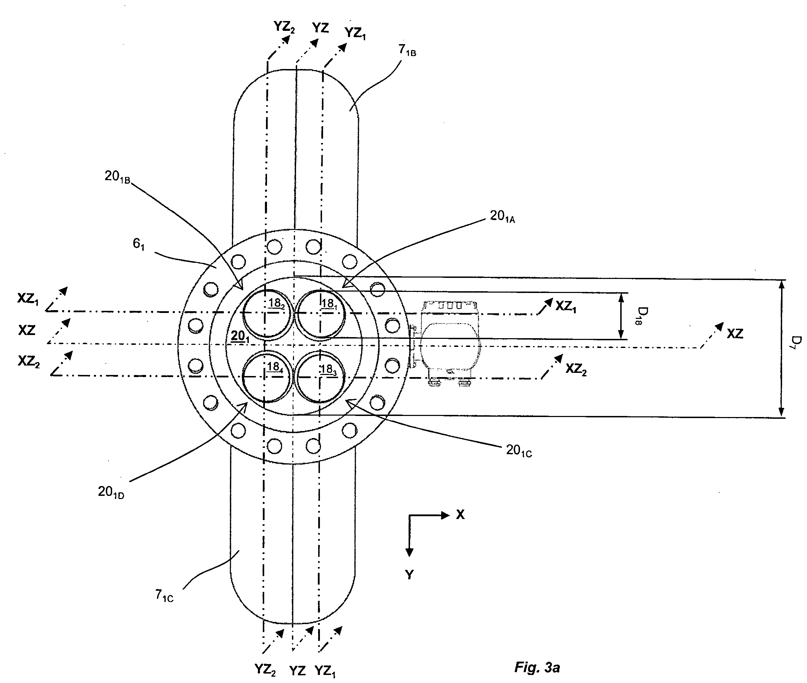

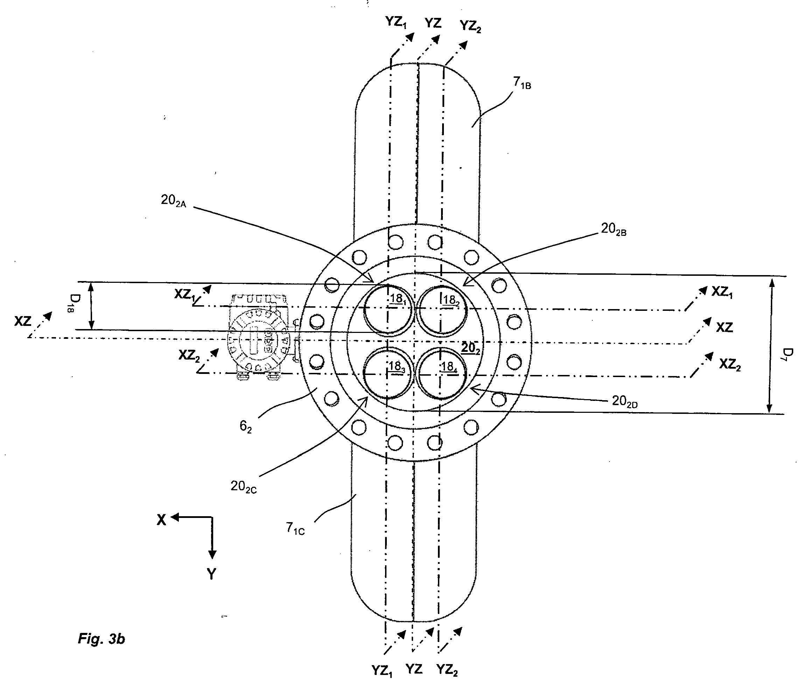

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene XZ₁ des Meßaufnehmers und der vorgenannten zweiten gedachten Längsschnittebene XZ₂ des Meßaufnehmers liegt, beispielsweise auch so, daß die erste Längsschnittebene XZ der Rohranordnung parallel zur ersten und zweiten Längsschnittebene XZ₁,XZ₂ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene YZ₁ des Meßaufnehmers und der vierten gedachten Längsschnittebene YZ₂ des Meßaufnehmers verläuft, etwa derart, daß die zweite gedachte Längsschnittebene YZ der Rohranordnung parallel zur dritten gedachten Längsschnittebene YZ₁ des Meßaufnehmers und parallel zur vierten gedachten Längsschnittebene YZ₂ des Meßaufnehmers ist. Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Aufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel zu einer zur Längsachse L senkrechten gedachten Querachse Q des Meßaufnehmers und eine gemeinsame Schnittlinie der zweiten Längsschnittebene YZ und der Querschnittsebene XY parallel zu einer zur Längsachse L senkrechten gedachten Hochachse H des Meßaufnehmers sind.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten Rechteck oder eines gedachten Quadrats, bilden, wobei nämliche Querschnittsflächen wiederum in einer gemeinsamen gedachten, senkrecht zu einer - beispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Rechtecks bzw. Quadrats bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen. Gemäß einer weiteren Ausgestaltung der Erfindung sind die Meßrohre so gebogen und so im Meßaufnehmer angeordnet, daß ein Kaliber-zu-Höhe-Verhältnis D₁₈/Q₁₈ der Rohranordnung, definiert durch ein Verhältnis des Kalibers, D₁₈, des ersten Meßrohrs zu einer maximalen seitlichen Ausdehnung der Rohranordnung Q₁₈, gemessen von einem Scheitelpunkt des ersten Meßrohrs zu einem Scheitelpunkt des dritten Meßrohrs bzw. gemessen von einem Scheitelpunkt des zweiten Meßrohrs zu einem Scheitelpunkt des vierten Meßrohrs, mehr als 0.05, insb. mehr als 0.07 und/oder weniger als 0.35, insb. weniger als 0.2, beträgt.

Zwecks der Realisierung eines möglichst kompakten Meßaufnehmers, nicht zuletzt auch für den erwähnten Fall, daß dieser eine vergleichsweise große nominelle Nennweite von 250 mm oder mehr aufweisen soll, und/oder daß die Meßrohre seitlich vergleichsweise weitausladend sind, kann das Aufnehmer-Gehäuse 7₁, wie aus der Zusammenschau der Fig. 1 und 2 ferner ohne weiteres ersichtlich, in vorteilhafter Weise ferner dadurch gebildet sein, daß das Aufnehmer-Gehäuse 7₁ mittels eines - hier zwecks vereinfachter Handhabung beispielsweise zunächst dreiteiligen, also aus drei einzelnen Segmente zusammengefügtes - entsprechende seitliche Ausnehmungen aufweisenden Rohres, das - wie bereits angedeutet - in etwa das Kaliber der anzuschließenden Rohrleitung aufweist, mithin mit einer nominellen Nennweite D₁₁ des Meßaufnehmers korrespondiert, sowie seitlich an dem schlußendlich das Mittelssegment des Aufnehmergehäuses bildenden Rohr fixierten, etwa angeschweißten, seitlich aus dem Mittelssegment herausragende Segmente der Meßrohre umgebende, insb. baugleichen, Gehäusekappen 7_{1B}, 7_{1C} gebildet sein. Von den beiden Gehäusekappen 7_{1B}, 7_{1C} können - wie aus der Zusammenschau der Fig. 1-4a ersichtlich - z.B. eine erste Gehäusekappe 7_{1B} über ein auf einer ersten Seite aus dem - nicht zuletzt auch als Traggestell für die Rohranordnung dienenden, mithin als Trägerrohr ausgebildeten - Mittelsegment herausragendes Segment des ersten Meßrohrs und ein auf der ersten Seite aus dem Mittelsegment herausragendes Segment des zweiten Meßrohrs und eine, etwa zur ersten Gehäusekappe baugleiche, zweite Gehäusekappe 7_{1C} über ein auf einer der ersten Seite gegenüberliegenden zweiten Seite aus dem Mittelsegment herausragendes Segment des dritten Meßrohrs und ein auf der zweiten Seite aus dem Mittelsegment herausragendes Segment des vierten Meßrohrs gestülpt sein. Im Ergebnis dessen sind die Meßrohre 18₁, 18₂, 18₃, 18₄ bzw. die damit gebildete Rohranordnung des Meßaufnehmers 11 sind, wie aus der Zusammenschau der Fign. 1, 2 und 4a ohne weiteres ersichtlich vom - hier mittels des im besonderen auch als Trägerohr dienenden Mittelsegment sowie der daran seitlich fixierten zwei Gehäusekappen gebildeten - Aufnehmer-Gehäuse 7₁ vollständig umhüllt. Für den vorgenannten Fall, daß das Aufnehmergehäuse mittels des rohrförmigen Mittelsegement und den daran seitlich fixierten Gehäusekappen gebildet ist, sind die vier Meßohre 18₁, 18₂, 18₃, 18₄ und das Aufnehmergehäuse 7₁ nach einer weiteren Ausgestaltung der Erfindung - nicht zuletzt auch zwecks einer Minimierung der Einbaumaße des gesamten Meßaufnehmers - aufeinander abgestimmt ferner so bemessen, daß ein Trägerrohr-zu-Meßrohr-Innendurchmesser-Verhältnis des Meßaufnehmers, definiert durch ein Verhältnis des größten Innendurchmessers des als Trägerrohr ausgebildeten Mittelsegments des Aufnehmergehäuses zu einem Kaliber D₁₈ des ersten Meßrohrs größer als 3 und/oder kleiner als 5, insb. kleiner als 4, ist.

Als Material für das Aufnehmer-Gehäuse 7₁ können im übrigen Stähle, wie etwa Baustahl bzw. rostfreier Stahl, oder auch andere geeignete bzw. üblicherweise hierfür geeignete hochfeste Werkstoffe verwendet werden. Für die meisten Anwendungen der industriellen Meßtechnik, insb. auch in der petrochemischen Industrie, können zudem auch Meßrohre aus rostfreiem Stahl, beispielsweise auch Duplexstahl, Superduplexstahl oder einem anderen (hochfesten) Edelstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann. Überdies kann das Aufnehmer-Gehäuse 7₁ ferner in vorteilhafter Weise auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik 12 im Betrieb intern erzeugten Betriebsparametern möglichst frühzeitig erfaßt und signalisiert werden können. Zur Vereinfachung des Transports des Meßaufnehmers bzw. des gesamten damit gebildeten In-line-Meßgeräts können ferner, wie beispielsweise auch in der eingangs erwähnten US-B 73 50 421 vorgeschlagen, einlaßseitig und auslaßseitig am außen am Aufnehmer-Gehäuse fixierte eine Transport-Öse vorgesehen sein.

Wie bereits eingangs erwähnt, werden beim Meßaufnehmer 11 die für die Messung erforderlichen Reaktionskräfte im jeweils zu messenden Medium durch das, beispielsweise simultane, Schwingenlassen der Meßrohre 18₁, 18₂, 18₃, 18₄ in einem aktiv angeregten Schwingungsmode, dem sogenannten Nutzmode, bewirkt. Zum Anregen von Schwingungen der Meßrohre, nicht zuletzt auch denen im Nutzmode, umfaßt der Meßaufnehmer ferner eine mittels wenigstens eines auf die Meßrohre 18₁, 18₂, 18₃, 18₄ einwirkenden elektro-mechanischen, beispielsweise elektrodynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger, mithin die damit gebildete Erregeranordnung dient hierbei im besonderen dazu, eine von der Umformer-Elektronik - etwa mittels wenigstens eines elektrischen Treibersignals - eingespeiste elektrische Erregerleistung P_{exc} in solche, z.B. pulsierenden oder harmonischen, Erregerkräfte F_{exc} zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter auf die anderen zwei Meßrohre mechanisch gekoppelt werden, und so Schwingungen im Nutzmode bewirken. Die - durch Konvertierung von in die Erregeranordnung eingespeister elektrischer Erregerleistung P_{exc} generierten - Erregerkräfte F_{exc} können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz, vgl. hierzu beispielsweise auch die US-A 48 01 897 oder die US-B 63 11 136. Gemäß einer weiteren Ausgestaltung der Erfindung ist daher ferner vorgesehen, daß die Umformer-Elektronik für die Generierung der Erregerkräfte benötigte elektrische Erregerleistung in die Erregeranordnung mittels wenigstens eines, dem Schwingungserreger, mithin der Erregeranordnung beispielsweise via Verbindungsleitungen zugeführten und/oder zumindest zeitweise periodischen, elektrischen Treibersignals einspeist, das mit wenigstens einer mit einer einer Eigenfrequenz eines natürlichen Schwingungsmodes der Rohranordnung, etwa dem erwähnten V-Mode oder dem erwähnten X-Mode, entsprechenden Signalfrequenz veränderlich ist. Beispielsweise kann das wenigstens eine Treibersignal auch eine Vielzahl von Signalkomponenten mit voneinander verschiedener Signalfrequenz aufweisen, von denen wenigstens eine - etwa eine hinsichtlich einer Signalleistung dominierende - Signalkomponente eine einer Eigenfrequenz eines natürlichen Schwingungsmodes der Rohranordnung in dem jedes der vier Meßrohre Biegeschwingungen ausführt, beispielsweise also dem erwähnten Biegeschwingungsmode erster Art, entsprechende Signalfrequenz aufweist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal hinsichtlich einer maximalen Spannungshöhe (Spannungsamplitude) und/oder einer maximalen Stromstärke (Stromamplitude) veränderlich auszuführen - etwa derart, daß beispielsweise Zylinderspule des wenigstens einen Schwingungserregers von einem von einer mittels nämlichen Treibersignals bereitgestellten veränderlichen Erregerspannung getriebenen Erregerstrom durchflossen ist.

Ziel der aktiven Anregung der Meßrohre zu Schwingungen ist es im Besonderen, nicht zuletzt auch für den Fall, daß das mittels des Meßaufnehmers schlußendlich gebildete Meßsystem zur Messung des Massendurchflusses verwendet werden soll, mittels der im Nutzmode vibrierenden Meßrohre im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können die Meßrohre 18₁, 18₂, 18₃, 18₄ mittels der daran gehalterten elektro-mechanischen Erregeranordnung zu, insb. simultanen, Biegeschwingungen, insb. auf einer momentanen mechanischen Eigenfrequenz der mittels der vier Meßrohre 18₁, 18₂, 18₃, 18₄ gebildeten Rohranordnung, angeregt werden, bei denen sie - zumindest überwiegend - lateral ausgelenkt und, wie aus der Zusammenschau der Fign. 3a, 3b, 6a, 6b, 7a, 7b für den Fachmann ohne weiteres ersichtlich, paarweise zueinander im wesentlichen gegengleich schwingen gelassen werden. Dies im besonderen derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen Z₁, Z₂, Z₃, Z₄ jeweils parallele gedachte Schwingungssachse ausgebildet sind, wobei die vier Schwingungssachsen im hier gezeigten Ausführungsbeispiel gleichermaßen zueinander wie auch zu der die beiden Strömungsteiler imaginär verbindenden und durch einen Massenschwerpunkt des Meßaufnehmers gedachten Längsachse L des gesamten Meßaufnehmers parallel sind. Anders gesagt, können die Meßrohre, wie bei Meßaufnehmern vom Vibrationstyp mit einem oder mehr gebogenen Meßrohren durchaus üblich, jeweils zumindest abschnittsweise nach Art eines endseitig eingespannten Auslegers schwingen gelassen werden, mithin also Ausleger-Biegeschwingungen um jeweils eine zu wenigstens zwei der gedachten Verbindungsachsen Z₁, Z₂, Z₃, Z₄ parallele gedachte Schwingungsachse ausführen. Gemäß einer Ausgestaltung der Erfindung ist die Erregeranordnung ferner derart ausgebildet ist, daß damit das erste Meßrohr 18₁ und das zweite Meßrohr 18₂ zu bezüglich der zweiten gedachten Längsschnittebene YZ gegengleichen, insb. auch zu bezüglich der zweiten gedachten Längsschnittebene YZ symmetrischen, Biegeschwingungen und das dritte Meßrohr 18₃ und das vierte Meßrohr 18₄ zu bezüglich der zweiten gedachten Längsschnittebene YZ gegengleichen, insb. auch zu bezüglich der zweiten gedachten Längsschnittebene YZ symmetrischen, Biegeschwingungen anregbar sind. Alternativ oder in Ergänzung dazu ist die Erregeranordnung nach einer weiteren Ausgestaltung der Erfindung ferner derart ausgebildet, daß damit das erste Meßrohr 18₁ und das dritte Meßrohr 18₃ zu bezüglich der zweiten gedachten Längsschnittebene YZ gegengleichen, beispielsweise auch zu bezüglich der zweiten gedachten Längsschnittebene YZ symmetrischen, Biegeschwingungen und das zweite Meßrohr 18₂ und das vierte Meßrohr 18₄ zu bezüglich der zweiten gedachten Längsschnittebene YZ gegengleichen, beispielsweise zu bezüglich der zweiten gedachten Längsschnittebene YZ symmetrischen, Biegeschwingungen anregbar sind.

Gemäß einer weiteren Ausgestaltung der Erfindung sind die Meßrohre 18₁, 18₂, 18₃, 18₄ im Betrieb mittels der Erregeranordnung 5 im Nutzmode ferner zumindest anteilig, insb. überwiegend, zu Biegeschwingungen angeregt, die eine Biegeschwingungsfrequenz aufweisen, die in etwa gleich einer momentanen mechanischen Resonanzfrequenz der die vier Meßrohre 18₁, 18₂, 18₃, 18₄ umfassenden Rohranordnung, mithin einer momentanen Eigenfrequenz eines Biegeschwingungsmode der Rohranordnung entspricht, ist oder die zumindest in der Nähe einer solchen Eigen- oder Resonanzfrequenz liegt. Die momentanen mechanischen Resonanzfrequenzen von Biegeschwingungen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf jeweils ein und derselben, insoweit einer gemeinsamen, natürlichen mechanischen Eigenfrequenz, schwingen gelassen. In vorteilhafter Weise sind das Schwingungsverhalten der mittels der vier Meßrohre 18₁, 18₂, 18₃, 18₄ gebildeten Rohranordnung wie auch die die Erregeranordnung steuernden Treibersignale ferner so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁,18₂ - etwa nach Art zweier Stimmgabelzinken - zueinander im wesentlichen gegengleich, mithin zumindest in der gedachten Querschnittsebene XY mit einer gegenseitigen Phasenverschiebung von etwa 180°, schwingen und auch das dritte und das vierte Meßrohr 18₃, 18₄ gleichermaßen zueinander im wesentlichen gegengleich schwingen.

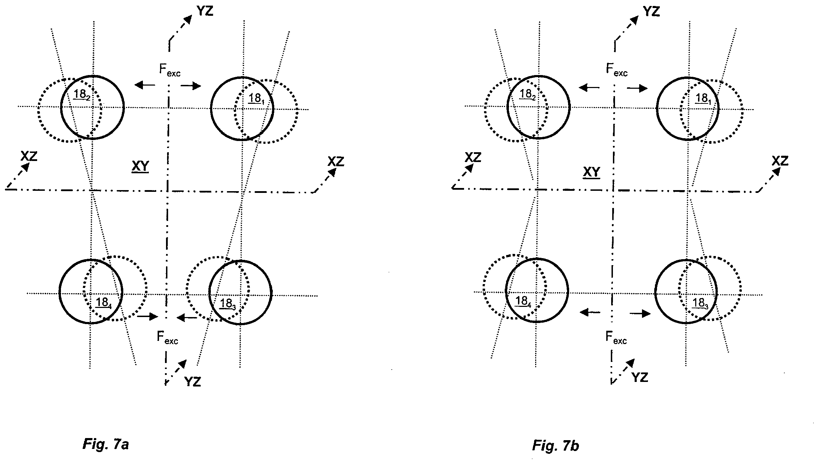

Untersuchungen an Meßsystemen mit einem Meßaufnehmer gemäß der in Rede stehenden Art haben ferner überraschender Weise ergeben, daß sich als Nutzmode, nicht zuletzt auch für die Ermittlung der Massendurchflußrate sowie der Dichte des im Meßaufnehmer geführten Mediums, im besonderen jener der Rohranordnung innewohnende natürliche - im weiteren als Biegeschwingungsgrundmode erster Art oder auch als V-Mode bezeichnete - Schwingungsmode eignet, in dem - wie auch in Fig. 7a schematisch dargestellt - das erste Meßrohr und das zweite Meßrohr bezüglich der zweiten gedachten Längsschnittebene YZ gegengleiche Biegeschwingungen um jeweils eine dem jeweiligen Meßrohr zugehörige statische Ruhelage ausführen, und in dem das dritte Meßrohr und das vierte Meßrohr bezüglich der zweiten gedachten Längsschnittebene ebenfalls gegengleiche Biegeschwingungen um jeweils eine dem jeweiligen Meßrohr zugehörige statische Ruhelage ausführen, und zwar so, daß - bezüglich der zweiten gedachten Längsschnittebene YZ - nämliche Biegeschwingungen des ersten Meßrohrs auch gegengleich zu nämlichen Biegeschwingungen des dritten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des vierten Meßrohrs sind. Die - hier ebenfalls als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise V-förmig erscheinen lassenden (vgl. Fig. 7a) - gegengleichen Biegeschwingungen des ersten und zweiten Meßrohrs bzw. des dritten und vierten Meßrohrs im V-Mode sind bei symmetrisch aufgebauter Rohranordnung und gleichmäßig durchströmter Rohranordnung zudem bezüglich der zweiten gedachten Längsschnittebene YZ symmetrisch ausgebildet. Die besondere Eignung des V-Modes als Nutzmode für Meßaufnehmer mit vier gebogenen Meßrohren konnte dabei nicht zuletzt auch auf die für das Schwingverhalten des Meßaufnehmers - sowohl räumlich als auch zeitlich gesehen - dabei insgesamt sehr günstig ausfallenden Spannungsverteilung im Meßaufnehmer, nicht zuletzt auch im Bereich der beiden Strömungsteiler, sowie auch auf die gleichermaßen günstig, mithin sehr gering ausfallenden schwingungsbedingten Deformierungen des Meßaufnehmers im allgemeinen, sowie der Strömungsteiler im besonderen, zurückgeführt werden.

Außer dem vorgenannten V-Mode weist die Rohranordnung zudem auch einen - im weiteren als X-Mode bezeichneten - natürlichen Biegeschwingungsmode zweiter Art auf, in dem - wie in Fig. 7b schematisch dargestellt - das erste Meßrohr und das zweite Meßrohr bezüglich der zweiten gedachten Längsschnittebene YZ gegengleiche Biegeschwingungen um die jeweils zugehörige statische Ruhelage ausführen und in dem das dritte Meßrohr und das vierte Meßrohr bezüglich der zweiten gedachten Längsschnittebene YZ gegengleiche Biegeschwingungen um jeweils zugehörige statische Ruhelage ausführen, im Unterschied zu den Biegeschwingungen im V-Mode, jedoch in der Weise, daß - bezüglich der zweiten gedachten Längsschnittebene YZ - nämliche Biegeschwingungen des ersten Meßrohrs auch gegengleich zu nämlichen Biegeschwingungen des vierten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des dritten Meßrohrs sind. Bei symmetrisch aufgebauter und gleichmäßig von Medium durchströmter Rohranordnung sind im übrigen auch die - hier wiederum als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise X-förmig erscheinen lassenden (vgl. Fig. 7b) - Biegeschwingungen im X-Mode ebenfalls bezüglich der zweiten gedachten Längsschnittebene YZ symmetrisch. Um eine separate, nicht zuletzt auch definierte Anregung des V-Modes bzw. des X-Modes über einen möglichst weiten - u.a. auch von im Betrieb schwankenden Dichten, Massendurchflußraten, Temperaturverteilungen im Meßaufnehmer etc. geprägten - Betriebsbereich des Meßaufnehmers zu gewährleisten, ist gemäß einer weiteren Ausgestaltung der Erfindung die mittels der vier Meßrohre gebildete Rohranordnung, mithin der damit gebildet Meßaufnehmer, so dimensioniert, daß eine - beispielsweise bei vollständig mit Wasser gefüllter Rohranordnung meßbare - Eigenfrequenz f_{18V}; des Biegeschwingungsmode erster Art (V-Mode), von einer, insb. bei vollständig mit Wasser gefüllter Rohranordnung bzw. zeitgleich zur Eigenfrequenz f_{18V} des Biegeschwingungsmode erster Art (V-Mode) meßbaren, Eigenfrequenz f_{18X} des Biegeschwingungsmode zweiter Art (X-Mode) verschieden ist, beispielsweise so, daß die Eigenfrequenzen f_{18V}; f_{18X};der beiden nämlichen Biegeschwingungsmoden (V-Mode, X-Mode) um 10Hz oder mehr voneinander abweichen. Im besonderen ist, nicht zuletzt auch für den Fall großer nomineller Nennweiten von mehr als 150 mm, die Rohranordnung so ausgebildet, daß, nämliche Eigenfrequenz f_{18V} des Biegeschwingungsmode erster Art um mehr als 10Hz größer als nämliche Eigenfrequenz f_{18X} des Biegeschwingungsmode zweiter Art ist. Die Erregeranordnung ist gemäß einer weiteren Ausgestaltung der Erfindung daher derart ausgebildet, daß damit das erste Meßrohr 18₁ und das zweite Meßrohr 18₂ im Betrieb zu gegengleichen Biegeschwingungen und das dritte Meßrohr 18₃ und das vierte Meßrohr 18₄ im Betrieb gegengleiche Biegeschwingungen anregbar sind, insb. auch dem Biegeschwingungsmode erster Art (V-Mode) entsprechenden Biegeschwingungen auf deren momentaner Eigenfrequenz f_{18V} bzw. dem Biegeschwingungsmode zweiter Art (X-Mode) entsprechenden Biegeschwingungen auf deren momentaner Eigenfrequenz f_{18V}, letztere Biegeschwingungen ggf. auch simultan mit den dem Biegeschwingungsmode erster Art (V-Mode) entsprechenden Biegeschwingungen.

Gemäß einer weiteren Ausgestaltung der Erfindung ist die Erregeranordnung 5, nicht zuletzt auch zwecks Anregung von gegengleichen Biegeschwingungen des ersten und zweiten Meßrohrs und/oder des dritten und vierten Meßrohrs, mittels eines, insb. differentiell auf das erste Meßrohr 18₁ und das zweite Meßrohr 18₂ wirkenden, ersten Schwingungserregers 5₁ gebildet. Ferner ist vorgesehen, daß als erster Schwingungserreger 5₁ ein, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist.

Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung nach einer Weiterbildung der Erfindung ferner einen, insb. elektrodynamischen und/oder differentiell auf das dritte Meßrohrs 18₃ und das vierte Meßrohr 18₄ wirkenden, zweiten Schwingungserreger 5₂. Der zweite Schwingungserreger 5₂ ist in vorteilhafter Weise zumindest insoweit baugleich zum ersten Schwingungserreger 5₁ ausgebildet, als er analog zu dessen Wirkprinzip arbeitet, beispielsweise also ebenfalls vom elektrodynamischen Typ ist. Gemäß einer weiteren Ausgestaltung ist der zweite Schwingungserreger 5₂ daher mittels eines am dritten Meßrohr gehalterten Permanentmagneten und einer von dessen Magnetfeld durchfluteten, am vierten Meßrohr gehalterten Zylinderspule gebildet. Die beiden Schwingungserreger 5₁, 5₂ der Erregeranordnung 5 können in vorteilhafter Weise elektrisch seriell verschaltet sind, insb. derart, daß ein gemeinsames Treibersignal gemeinsamem mithin simultane Schwingungen der Meßrohre 18₁, 18₃, 18₂, 18₄ anregt, etwa Biegeschwingungen im V-Mode und/oder im X-Mode. Nicht zuletzt für den zuvor erwähnten Fall, daß sowohl Biegeschwingungen im V-Mode als auch Biegeschwingungen im X-Mode mittels der beiden Schwingungserreger 5₁, 5₂ aktiv angeregt werden sollen, kann es von Vorteil sein, die Schwingungserreger 5₁, 5₂ so zu dimensionieren und so an der Rohranordnung anzubringen, daß im Ergebnis ein Übertragungsfaktor des ersten Schwingungserregers 5₁, definiert durch ein Verhältnis von darin eingespeister elektrischer Erregerleistung zu einer damit erzeugten Schwingungen der Meßrohre bewirkende Erregerkraft, zumindest innerhalb eines den V-Mode und den X-Mode umfassenden Frequenzbandes von einem Übertragungsfaktor des zweiten Schwingungserregers 5₁, definiert durch ein Verhältnis von darin eingespeister elektrischer Erregerleistung zu einer damit erzeugten Schwingungen der Meßrohre bewirkende Erregerkraft, verschieden ist, etwa derart, daß nämliche Übertragungsfaktoren um 10% oder mehr voneinander abweichen. Dies ermöglicht beispielsweise auch eine getrennte Anregung von V- und X-Mode, nicht zuletzt auch bei serieller Verschaltung der beiden Schwingungserreger 5₁, 5₂ und/oder Speisung der beiden Schwingungserreger 5₁, 5₂ mit einem einzigen gemeinsamen Treibersignal, und kann im Falle elektrodynamischer Schwingungserreger 5₁, 5₂ z.B. durch Verwendung von Zylinderspulen mit verschieden Impedanzen bzw. unterschiedlichen Windungszahlen und/oder von unterschiedlich dimensionierten bzw. aus unterschiedlichen magnetischen Materialien bestehenden Permanentmagneten auf sehr einfache Weise erreicht werden. Es sei an dieser Stelle zudem ferner noch erwähnt, daß, obgleich der bzw. die Schwingungserreger der im Ausführungsbeispiel gezeigten Erregeranordnung jeweils etwa mittig an den jeweiligen Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2, 4a, 4b, 5a, und 5b jeweils ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Sensoranordnung 19 zum Erzeugen von Vibrationen, insb. Biegeschwingungen, der Meßrohre repräsentierenden Schwingungssignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweites Schwingungssignal liefern. Dies im besonderen in der Weise, daß wenigstens zwei der von der Sensoranordnung 19 gelieferten Schwingungssignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungssignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungssignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können. Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt. Nicht zuletzt zur Schaffung eines möglichst kompakten, dennoch aber für den Massendurchfluß möglichst empfindlichen Meßaufnehmers sind nach einer weiteren Ausgestaltung der Erfindung die Schwingungssensoren 19₁, 19₂, abgestimmt auf die Einbaulänge L₁₁ des Meßaufnehmers, so im Meßaufnehmer angeordnet, daß ein Meßlänge-zu-Einbaulänge-Verhältnis L₁₉/L₁₁ des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur erwähnten Meßlänge L₁₉ des Meßaufnehmers definiert ist, mehr als 0.05, insb. mehr als 0.09, beträgt.

Die Sensoranordnung 19 ist ferner, wie bei derartigen Meßaufnehmern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Die Meßschaltung empfängt die Schwingungssignale der Sensoranordnung 19 und generiert daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte, die beispielsweise eine Massedurchflußrate, einen totalisierten Massendurchfluß und/oder eine Dichte und/oder eine Viskosität des zu messenden Mediums repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Im beosnderen ist die Meßschaltung, mithin die damit gebildte Umformer-Elektronik ferner dafür vorgesehen und ausgelegt, anhand von in der Erregeranordnung umgesetzter elektrischer Erregerleistung, beispielsweise periodisch wiederkehrend und/oder auf Abruf, einen die Viskosität des strömenden Mediums repräsentierenden Viskosität-Meßwert zu generieren und/oder anhand von vom Meßaufnehmer gelieferten Schwingungssignalen, beispielsweise periodisch wiederkehrend und/oder auf Abruf, einen die Massendurchflußrate des strömenden Mediums repräsentierenden Massendurchfluß-Meßwert und/oder, beispielsweise periodisch wiederkehrend und/oder auf Abruf, einen die Dichte des strömenden Mediums repräsentierenden Dichte-Meßwert zu generieren.

Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebsschaltungen verwendet werden können, wie sie beispielsweise bereits in herkömmlichen Coriolis-Massedurchfluß-/ Dichtemeßgeräten breite Anwendung gefunden haben.

Die Umformer-Elektronik 12, einschließlich der darin realisierten Meß- und Betriebsschaltung, kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein.

Wie bereits mehrfach erwähnt ist das In-Line-Meßgerät und insoweit auch der Meßaufnehmer 11 im besonderen für Messungen auch hoher Massendurchflüsse von mehr als 1000 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 50 mm beträgt, insb. aber größer als 100 mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 40 mm beträgt. Im besonderen sind die Meßrohre 18₁, 18₂, 18₃, 18₄ ferner so ausgebildet, das jedes ein Kaliber D₁₈ von mehr als 60 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre 18₁, 18₂, 18₃, 18₄ dabei so ausgelegt, daß deren Meßrohrlänge L₁₈ jeweils größer als 1200 mm ist. Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann dann die die vier Meßrohre 18₁, 18₂, 18₃, 18₄ umfassende Rohranordnung zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂, 18₃, 18₄ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein. Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten. Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, insb. weniger als 0.07, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der oben bezeichnten Meßrohrlänge L₁₈ zumindest des ersten Meßrohrs zur Einbaulänge L₁₁ des Meßaufnehmers, mehr als 0.7, insb. mehr als 0.8 und/oder weniger als 1.2, beträgt.

Zwecks Einstellen von Schwingungseigenschaften der Rohranordnung, nicht zuletzt auch zwecks einer möglichst einfachen, gleichwohl effektiven Realisierung einer ausreichenden Separierung des erwähnten V-Modes vom X-Modes hinsichtlich ihrer Eigenfrequenzen f_{18V}; f_{18X}; einerseits, sowie anderseits auch zwecks Verbesserung der mechanischen Kopplung der vier Meßrohre zum Vergleichmäßigen der von den vier Meßrohren simultan ausgeführten Schwingungen, zumindest den aktiv angeregten Biegeschwingungen Nutzmode, etwa auch bei allfällig durch Bauteiletoleranzen bedingten Ungleichheiten, umfaßt der Meßaufnehmer nach einer weiteren Ausgestaltung der Erfindung ferner ein, sowohl vom ersten Strömungsteiler als auch vom zweiten Strömungsteiler beabstandet, einlaßseitig an jedem der vier Meßrohre fixiertes - beispielsweise im wesentlichen X-förmige Grundfläche oder, wie in Fig. 4a oder 4b schematisch dargestellt, eine im wesentlichen H-förmige Grundfläche aufweisendes - erstes Kopplerelement 24₁ erster Art zum Einstellen von Eigenfrequenzen natürlicher Schwingungsmoden der Rohranordnung, sowie ein - sowohl vom ersten Strömungsteiler als auch vom zweiten Strömungsteiler beabstandet - auslaßseitig an jedem der vier Meßrohre fixiertes, etwa zum ersten Kopplerelement 24₁ erster Art im wesentlichen baugleiches, ggf. auch eine im wesentlichen X-förmige oder im wesentlichen H-förmige Grundfläche aufweisendes, zweites Kopplerelement 24₂ erster Art zum Einstellen von Eigenfrequenzen natürlicher Schwingungsmoden der Rohranordnung. Jedes der beiden Kopplerelemente erster Art kann hierbei ferner so ausgebildet und jeweils so an den Meßrohren fixiert sein, daß es in Projektion auf die erwähnte gedachte Querschnittsebene XY des Meßaufnehmers X-förmig ausgebildet ist, oder daß es, wie in Fig. 4a und 4b dargestellt, in Projektion auf nämliche Querschnittsebene XY H-förmig ausgebildet ist. Die Kopplerelemente 24₁ erster Art können beispielsweise jeweils mittels plattenförmiger Teilelemente gebildet oder, wie in der Fig. 4a, 4b schematisch dargestellt, mittels eines monolithischen Stanz-Biegeteils hergestellt sein. Die beiden Kopplerelemente erster Art sind im in der Fig. 4a, 4b bzw. 5a, 5b gezeigten Ausführungsbeispiel ferner so ausgebildet und an den Meßrohren angebracht, daß sie bezüglich der erwähnten ersten gedachten Längsschnittebene XZ des Meßaufnehmers bzw. bezüglich der erwähnten zweiten gedachten Längsschnittebene YZ des Meßaufnehmers im wesentlichen symmetrisch sind, mithin also die erste gedachte Längsschnittebene XZ und/oder die zweite gedachte Längsschnittebene YZ jeweils auch Symmetrieebene jedes der beiden Kopplerelemente erster Art ist. Die beiden Kopplerelemente erster Art sind darüberhinaus auch bezüglich der erwähnten gedachten Querschnittsebene XY des Meßaufnehmers vorzugsweise symmetrisch, mithin bezüglich nämlicher Querschnittsebene XY äquidistant und parallel verlaufend, im Meßaufnehmer angeordnet. Falls erforderlich - beispielsweise weil der Meßaufnehmer für die Messung extrem heißer Medien bzw. für die Messung in Anwendungen mit über einen weiten Bereich schwankender Betriebstemperatur, etwa infolge wiederkehrend in-situ durchgeführten Reinigungsvorgängen des Meßaufnehmers ("cleaning in process", "sterilizing in process" etc.), vorgesehen ist und insoweit nennenswerte thermische Ausdehnungen der Meßrohre zu erwarten sind - können die Kopplerelemente 24₁, 242 erster Art ferner so ausgebildet sein, daß sie sich im wesentlichen gleichermaßen ausdehnen, wie die darüber jeweils gekoppelten Meßrohre und/oder daß sie zumindest gegenüber von Kräften, die in Richtung einer durch die Scheitelpunkte der beiden durch das jeweilige Kopplerelemente zweiter Art miteinander verbundenen Meßrohre verlaufenden, etwa mit der erwähnten gedachten Hochachse H koinzidenten, oder dazu parallelen Wirkungslinie ausreichend nachgiebig sind. Letzteres kann beispielsweise durch entsprechend in das jeweilige Kopplerelement eingeformte - etwa im wesentlichen quer zu vorgenannter Wirkungslinie verlaufende - Schlitze realisiert werden. Alternativ oder in Ergänzung zu in die Kopplerelemente eingeformten Schlitzen ist gemäß einer anderen Ausgestaltung der Erfindung jedes der beiden Kopplerelement erster Art, nicht zuletzt zwecks Erzielung einer ausreichenden Nachgiebigkeit in Richtung der gedachten Hochachse H und wie auch aus der Zusammenschau der Fig. 4a, 4b, 5a, 5b ohne weiteres ersichtlich, gewölbt ausgeführt. Dies im besonderen in der Weise, daß jedes der beiden Kopplerelement erster Art, wie auch in den Fig. 4a, 4b, 5a, 5b angedeutet, bezüglich der zwischen nämlichen Kopplerelementen 24₁, 24₂ verlaufenden gedachten Querschnittsebene XY, nämlich von der Querschnittsebene XY aus gesehen, jeweils zumindest abschnittsweise konvex sind. Im Ergebnis ist so auch eine geringfügige Änderung des relative Abstandes, etwa infolge thermisch bedingter Dehnung, zwischen Meßrohre ermöglicht, und zwar unter weitgehender Vermeidung von das Schwingungsverhalten der Rohranordnung signifikant beeinflussenden Erhöhungen von mechanischen Spannungen.

Falls erforderlich, können desweiteren allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig jeweils mittels als sogenannte Knotenplatten dienenden Kopplerelemente - im folgenden Kopplerelemente zweiter Art - miteinander mechanisch verbunden sind. Darüber hinaus können mittels solcher Kopplerelemente zweiter Art, sei es durch deren Dimensionierung und/oder deren Positionierung auf den Meßrohren mechanische Eigenfrequenzen der Meßrohre und somit auch mechanische Eigenfrequenzen der mittels der vier Meßrohre gebildeten Rohranordnung, einschließlich daran angebrachter weiterer Komponenten des Meßaufnehmers, mithin auch die natürlichen Eigenfrequenzen von deren V-Mode bzw. von deren X-Mode, und insoweit auch das Schwingungsverhalten des Meßaufnehmers insgesamt gezielt beeinflußt werden. Die als Knotenplatten dienenden Kopplerelemente zweiter Art können beispielsweise dünne, insb. aus demselben oder einem ähnlichen Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂ bzw. 18₃ bzw. 18₄ aufgeklemmt und ggf. hernach noch mit dem jeweiligen Meßrohr, beispielsweise durch Hartverlöten oder Schweißen, stoffschlüssig verbunden werden können.

Dementsprechend umfaßt die Rohranordnung gemäß einer weiteren Ausgestaltung der Erfindung ein, beispielsweise plattenförmiges, erstes Kopplerelement 25₁ zweiter Art, das - wie aus den Fig. 4a, 5a, 5b, 6a ohne weiteres ersichtlich - zum Bilden von einlaßseitigen Schwingungsknoten zumindest für Vibrationen, nicht zuletzt auch Biegeschwingungen, etwa denen im erwähnten V-Mode, des ersten Meßrohrs und für dazu gegengleiche Vibrationen des zweiten Meßrohrs, vom ersten Strömungsteiler beabstandet, einlaßseitig am ersten Meßrohr und am zweiten Meßrohr fixiert ist, sowie ein, etwa zum ersten Kopplerelement baugleiches, zweites Kopplerelement 25₂ zweiter Art, das zum Bilden von auslaßseitigen Schwingungsknoten für Vibrationen, nicht zuletzt auch Biegeschwingungen, mithin denen im erwähnten V-Mode bzw. X-Mode, des ersten Meßrohrs 18₁ und für dazu gegengleiche Vibrationen des zweiten Meßrohrs 18₁, vom zweiten Strömungsteiler 20₂ beabstandet, auslaßseitig am ersten Meßrohr 18₁ und am zweiten Meßrohr 18₂ fixiert ist. Gleichermaßen weist die Rohranordnung zum Bilden von einlaßseitigen Schwingungsknoten für Vibrationen, insb. den erwähnten Biegeschwingungen, des dritten Meßrohrs und für dazu gegengleiche Vibrationen des vierten Meßrohrs ein, etwa wiederum plattenförmiges bzw. zum ersten Kopplerelement 25₁ zweiter Art baugleiches, drittes Kopplerelement 25₃ zweiter Art, das, vom ersten Strömungsteiler beabstandet einlaßseitig, am dritten Meßrohr und am vierten Meßrohr fixiert ist, sowie ein, etwa zum ersten Kopplerelement 25₁ zweiter Art baugleiches, viertes Kopplerelement 25₄ zweiter Art, das zum Bilden von auslaßseitigen Schwingungsknoten für Vibrationen, etwa den erwähnten Biegeschwingungen, des dritten Meßrohrs und für dazu gegengleiche Vibrationen des vierten Meßrohrs, vom zweiten Strömungsteiler beabstandet, auslaßseitig auch am dritten Meßrohr und am vierten Meßrohr fixiert ist, auf.

Die vier vorgenannten Kopplerelemente 25₁, 25₂, 25₃, 25₄ zweiter Art sind gemäß einer weiteren Ausgestaltung der Erfindung und wie auch aus der Zusammenschau der Fig. 4a, 4b, 5a, 5b, 6a, 6b ohne weiteres ersichtlich jeweils an genau zwei, ansonsten aber an keinem weiteren der vier Meßrohre fixiert, so daß im Ergebnis das erste und zweite Kopplerelemente 25₁, 25₂ zweiter Art lediglich am ersten und zweiten Meßrohr und das dritte und vierte Kopplerelement 25₃, 25₄ zweiter Art lediglich am dritten und vierten Meßrohr fixiert sind. Infolge dessen kann die Rohranordnung, mithin auch der Meßaufnehmer z.B. in der Weise hergestellt, daß zunächst das erste und zweite Kopplerelement 25₁, 25₂ zweiter Art jeweils am (künftigen) ersten und zweiten Meßrohr 18₁, 18₂ unter Bildung eines ersten Meßrohrpakets und das dritte und vierte Kopplerelement 25₃, 25₄ zweiter Art jeweils am (künftigen) dritten und vierten Meßrohr 18₃, 18₄ unter Bildung eines zweiten Meßrohrpakets fixiert werden. Somit ist es möglich, die beiden Meßrohrpakte zu einem späteren Zeitpunkt, etwa unmittelbar vor oder auch erst nach dem Einsetzen der beiden Meßrohrpakte in das erwähnte rohrförmige Mittelsegment 7_{1A} des (künftigen) Aufnehmergehäuses, durch entsprechendes Fixieren des ersten und zweiten Kopplerelements 24₁, 24₂ erster Art an jedem der beiden Meßrohrpakte, etwa einstweilen jeweils an wenigstens einem der Meßrohre 18₁, 18₂ des ersten Meßrohrpakets und an wenigstens einem der Meßrohre 18₃, 18₄ des zweiten Meßrohrpakets, zur Rohranordnung zusammenzufügen. Dies hat - nicht zuletzt auch für den erwähnten Fall, das der Meßaufnehmer für große nominelle Nennweiten von mehr als 100 mm trotz der relativ großen Abmessungen seiner Komponenten, mithin der Rohranordnung, des Aufnehmergehäuses, der Strömungsteiler etc. - den Vorteil, daß die im Ergebnis relativ ausladende Rohranordnung während des überwiegenden Dauer des gesamten Fertigungsprozesses, indem der Meßaufnehmer hergestellt wird, erst zu einem relativ späten Zeitpunkt in toto gehandhabt zu werden braucht. Darüberhinaus kann dadurch durchaus auch auf solche Rohranordnung zurückgegriffen werden, wie sie bislang in herkömmliche Meßaufnehmer mit Doppelrohranordnung verwendet worden sind, einhergehend mit einer beträchtlichen Reduzierung der Fertigungs- und Lagerhaltungskosten. Falls erforderlich, können die Kopplerelemente 25₁, 25₂, 25₃, 25₄ aber auch in entsprechender jeweils an allen vier Meßrohren fixiert sein, beispielsweise auch für den Fall, daß der Meßaufnehmer für relativ kleine nominelle Nennweiten von 50 mm oder weniger ausgelegt ist.

Im hier gezeigten Ausführungsbeispiel sind das erste Kopplerelement 25₁ zweiter Art sowohl an einem sich zwischen dem ersten Strömungsteiler 20₁ und dem ersten Kopplerelement 24₁ erster Art erstreckenden - hier abschnittsweise gebogenen - einlaßseitigen Rohrsegment des ersten Meßrohrs 18₁ als auch an einem sich gleichermaßen zwischen dem ersten Strömungsteiler 20₁ und dem ersten Kopplerelement 24₁ erster Art erstreckenden einlaßseitigen Rohrsegment des zweiten Meßrohrs 18₂ und das zweite Kopplerelement 25₂ zweiter Art sowohl an einem sich zwischen dem zweiten Strömungsteiler 20₂ und dem zweiten Kopplerelement 24₂ erster Art erstreckenden - hier ebenfalls abschnittsweise gebogenen - auslaßseitigen Rohrsegment des ersten Meßrohrs 18₁ als auch an einem sich gleichermaßen zwischen dem zweiten Strömungsteiler 20₂ und dem zweiten Kopplerelement 24₂ erster Art erstreckenden auslaßseitigen Rohrsegment des zweiten Meßrohrs 18₂ fixiert. In analoger Weise sind das dritte Kopplerelement 25₃ zweiter Art sowohl an einem sich zwischen dem ersten Strömungsteiler 20₁ und dem ersten Kopplerelement 24₁ erster Art erstreckenden - hier ebenfalls abschnittsweise gebogenen - einlaßseitigen Rohrsegment des dritten Meßrohrs 18₃ als auch an einem sich gleichermaßen zwischen dem ersten Strömungsteiler 20₁ und dem ersten Kopplerelement 24₁ erster Art erstreckenden einlaßseitigen Rohrsegment des vierten Meßrohrs 18₄ und das vierte Kopplerelement 25₄ zweiter Art sowohl an einem sich zwischen dem zweiten Strömungsteiler 20₂ und dem zweiten Kopplerelement 24₂ erster Art erstreckenden - hier wiederum abschnittsweise gebogenen - auslaßseitigen Rohrsegment des dritten Meßrohrs 18₃ als auch an einem sich gleichermaßen zwischen dem zweiten Strömungsteiler 20₂ und dem zweiten Kopplerelement 24₁ erster Art erstreckenden auslaßseitigen Rohrsegment des vierten Meßrohrs 18₄ fixiert. Dies im besonderen in der Weise, daß - wie aus der Zusammenschau der Fig. 4a, 4b, 5a, 5b ohne weiteres ersichtlich - das zumindest erste und vierte Kopplerelement zweiter Art zueinander parallel sind und zumindest das zweite und dritte Kopplerelement zweiter Art zueinander parallel sind. Jedes der vier vorgenannten, insb. einander baugleichen, Kopplerelemente 25₁, 25₂ zweiter Art ist gemäß einer weiteren Ausgestaltung der Erfindung zudem plattenförmig ausgebildet, beispielsweise in derart, daß es jeweils eine rechteckförmige, oder oder aber daß es jeweils, wie auch aus den Fig. 4a, 4b ersichtlich, eine eher ovale Grundfläche aufweist. Wie aus der Zusammenschau der Fig. 4a, 4b, 5a, 5b ferner ersichtlich, könne die vier Kopplerelemente 24₁, 24₂ 24₃, 24₄ ferner so ausgebildet und im Meßaufnehmer so plaziert sein, daß sie bezüglich der gedachten Längsschnittebene YZ symmetrisch sind und daß sie bezüglich der gedachten Längsschnittebene XZ und bezüglich der gedachten Querschnittsebene XY paarweise symmetrisch angeordnet sind, im Ergebnis also ein Massenschwerpunkt jedes der Kopplerelemente zweiter Art jeweils einen gleichen Abstand zu einem Massenschwerpunkt der Rohranordnung aufweist. Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der US-A 2006/0150750 vorgeschlagen und wie in den Fig. 4a, 4b, 5a, 5b angedeutet, darüberhinaus noch weitere, solcher als Knotenplatten wirkenden Kopplerelemente der vorgenannten Art aufweist, beispielsweise also insgesamt 8 oder 12 Kopplerelemente zweiter Art.

Wie in den Fign. 5a und 5b schematisch dargestellt, definieren die Rohrform jedes der Meßrohre zusammen mit einem minimaler Abstand zwischen dem ersten und zweiten Kopplerelement zweiter Art - mithin also bei der Verwendung von 8 oder mehr als solcher Kopplerelemente die dem Massenschwerpunkt der Rohranordnung ein- und auslaßseitig jeweils am nahesten liegenden, insoweit also die ein- und auslaßseitig jeweils innersten Kopplerelemente zweiter Art - jeweils eine Nutz-Schwinglänge, L₁₈ₓ, jedes der Meßrohre. Die Nutz-Schwinglänge, L₁₈ₓ, des jeweiligen Meßrohrs entspricht hierbei, wie auch in den Fig. 5a und 5b schematisch dargestellt, dabei einer Länge des zwischen den beiden Kopplerelementen 25₁, 25₂ zweiter Art verlaufenden Abschnitts der Biegelinie des nämlichen Meßrohrs, wobei nach einer weiteren Ausgestaltung der Erfindung die Kopplerelemente zweiter Art so im Meßaufnehmer plaziert sind, daß im Ergebnis die Nutz-Schwinglänge jedes der Meßrohre 18₁, 18₂, 18₃, 18₄ weniger als 3000 mm, insb. weniger als 2500 mm und/oder mehr als 800 mm, beträgt. Alternativ oder in Ergänzung ist ferner vorgesehen, die die Meßrohre so auszubilden und die Kopplerelemente zweiter Art so anzuordnen, daß alle vier Meßrohre 18₁, 18₂, 18₃, 18₄ im Ergebnis die gleiche Nutz-Schwinglänge, L₁₈ₓ, aufweisen. Nach einer weiteren Ausgestaltung der Erfindung sind zu dem das erste Meßrohr und das zweite Meßrohr zumindest über den sich zwischen dem ersten Kopplerelement zweiter Art und dem zweiten Kopplerelement zweiter Art erstreckenden Bereich - mithin also deren jeweiligen Nutz-Schwinglänge - zueinander parallel, und sind auch das dritte Meßrohr und das vierte Meßrohr zumindest über den sich zwischen dem dritten Kopplerelement zweiter Art und dem vierten Kopplerelement zweiter Art erstreckenden Bereich - mithin also deren jeweiligen Nutz-Schwinglänge - zueinander parallel.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, abgestimmt auf die erwähnte Nutz-Schwinglänge, so bemessen, daß ein Kaliber-zu-Schwinglänge-Verhältnis D₁₈/L₁₈ₓ des Meßaufnehmers, definiert durch ein Verhältnis des Kalibers D₁₈ des ersten Meßrohrs zur Nutz-Schwinglänge L₁₈ₓ des ersten Meßrohrs, mehr als 0.03, insb. mehr als 0.05 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/L₁₁ des Meßaufnehmers, definiert durch ein Verhältnis der Nutz-Schwinglänge L₁₈ₓ des ersten Meßrohrs zur Einbaulänge L₁₁ des Meßaufnehmers, mehr als 0.55, insb. mehr als 0.6 und/oder weniger als 1.5, beträgt. Nach einer weiteren Ausgestaltung der Erfindung sind die Schwingungssensoren, abgestimmt auf die Nutz-Schwinglänge, so im Meßaufnehmer angeordnet, daß ein Meßlänge-zu-Schwinglänge-Verhältnis L₁₉/L₁₈ₓ des Meßaufnehmers, definiert durch ein Verhältnis der erwähnten Meßlänge L₁₉ des Meßaufnehmers zur Nutz-Schwinglänge L₁₈ₓ des ersten Meßrohrs, mehr als 0.3, insb. mehr als 0.4 und/oder weniger als 0.95, beträgt. Im übrigen können Meßlänge, L₁₉, und/oder Meßlänge-zu-Schwinglänge-Verhältnis L₁₉/L₁₈ₓ darüberhinaus durchaus auch gemäß den in den eigen, nicht vorveröffentlichten internationalen Anmeldungen PCT/EP2010/058797 bzw. PCT/EP2010/058799 vorgeschlagenen Kriterien zur Bestimmung optimaler Meßlängen bzw. optimaler Meßlänge-zu-Schwinglänge-Verhältnisse für Meßaufnehmer vom Vibrationstyp genauer bestimmt werden.

Zur Verringerung allfälliger Querempfindlichkeiten des Meßaufnehmers auf Druck, nicht zuletz auch bei einem möglichst hohen Nennweite-zu-Einbaulänge-Verhältnis D₁₁/L₁₁ von größer als 0.1 und einem möglichst niedrigen Schwinglänge-zu-Einbaulänge-Verhältnis L₁₈ₓ/L₁₁ von weniger als 1.5, können in vorteilhafter Weise ferner ringförmige Versteifungselementen an den Meßrohren verwendet werden, von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen kann es hierbei von Vorteil sein, wenn auf jedem der Meßrohre 18₁, 18₂, 18₃ bzw. 18₄, wenigstens vier solcher, insb. baugleicher, Versteifungselemente angebracht sind. Die Versteifungselementen können dabei beispielsweise so im Meßaufnehmer 11 plaziert sein, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt.

Durch die Verwendung von vier statt wie bisher zwei parallel durchströmten gebogenen Meßrohren ist es somit auch möglich, Meßaufnehmer der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von weniger als 3 bar, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann.

## Patentansprüche

1. Meßaufnehmer vom Vibrationstyp zum Erfassen wenigstens einer physikalischen Meßgröße eines in einer Rohrleitung geführten strömungsfähigen Mediums, welcher Meßaufnehmer umfaßt:
- ein Aufnehmer-Gehäuse (7₁), von dem ein einlaßseitiges erstes Gehäuseende mittels eines genau vier jeweils voneinander beabstandeten Strömungsöffnungen (20_{1A}, 20_{1B}, 20_{1C}, 20_{1D}) aufweisenden einlaßseitigen ersten Strömungsteilers (20₁) und ein auslaßseitiges zweites Gehäuseende mittels eines genau vier jeweils voneinander beabstandeten Strömungsöffnungen (20_{2A}, 20_{2B}, 20_{2C}, 20_{2D}) aufweisenden auslaßseitigen zweiten Strömungsteilers (20₂) gebildet sind;
- eine Rohranordnung mit genau vier unter Bildung strömungstechnisch parallel geschalteter Strömungspfade an die Strömungsteiler (20₁, 20₂) angeschlossenen gebogenen, insb. zumindest abschnittsweise V-förmigen oder zumindest abschnittsweise kreisbogenförmigen, Meßrohren (18₁, 18₂, 18₃, 18₄) zum Führen von strömendem Medium, von denen
-- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
-- ein viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet;
- eine elektro-mechanische Erregeranordnung (5) zum Erzeugen und/oder Aufrechterhalten von, insb. einem natürlichen Biegeschwingungsmode der Rohranordnung entsprechenden, Biegeschwingungen jedes der vier Meßrohre (18₁, 18₂, 18₃, 18₄);
- sowie eine auf Vibrationen der Meßrohre (18₁, 18₂, 18₃, 18₄) reagierende Sensoranordnung (19) zum Erzeugen von Vibrationen der Meßrohre (18₁, 18₂, 18₃, 18₄) repräsentierenden Schwingungssignalen;
- wobei die beiden Strömungsteiler (20₁, 20₂) so ausgebildet und im Meßaufnehmer angeordnet sind,
-- daß eine die erste Strömungsöffnung (20_{1A}) des ersten Strömungsteilers (20₁) mit der ersten Strömungsöffnung (20_{2A}) des zweiten Strömungsteilers (20₂) imaginär verbindende gedachte erste Verbindungsachse (Z₁) des Meßaufnehmers parallel zu einer die zweite Strömungsöffnung (20_{1B}) des ersten Strömungsteilers (20₁) mit der zweiten Strömungsöffnung (20_{2B}) des zweiten Strömungsteilers (20₂) imaginär verbindende gedachten zweiten Verbindungsachse (Z₂) des Meßaufnehmers verläuft, und
-- daß eine die dritte Strömungsöffnung (20_{1C}) des ersten Strömungsteilers (20₁) mit der dritten Strömungsöffnung (20_{2C}) des zweiten Strömungsteilers (20₂) imaginär verbindende gedachte dritten Verbindungsachse (Z₃) des Meßaufnehmers parallel zu einer die vierte Strömungsöffnung (20_{1D}) des ersten Strömungsteilers (20₁) mit der vierten Strömungsöffnung (20_{2B}) des zweiten Strömungsteilers (20₂) imaginär verbindende gedachten vierten Verbindungsachse (Z₄) des Meßaufnehmers verläuft, und
- wobei die Meßrohre (18₁, 18₂, 18₃, 18₄) so ausgebildet und im Meßaufnehmer angeordnet sind,
-- daß die Rohranordnung eine sowohl zwischen dem ersten Meßrohr (18₁) und dem dritten Meßrohr (18₃) als auch zwischen dem zweiten Meßrohr (18₂) und dem vierten Meßrohr (18₄) liegende erste gedachte Längsschnittebene (XZ) aufweist, bezüglich der die Rohranordnung spiegelsymmetrisch ist, und
-- daß die Rohranordnung eine zu deren gedachter erster Längsschnittebene (XZ) senkrechte, sowohl zwischen dem ersten Meßrohr (18₁) und zweiten Meßrohr (18₂) als auch zwischen dem dritten Meßrohr (18₃) und vierten Meßrohr (18₄) verlaufende zweite gedachte Längsschnittebene (YZ) aufweist, bezüglich der die Rohranordnung gleichfalls spiegelsymmetrisch ist,
- wobei die Rohranordnung einen natürlichen Biegeschwingungsmode erster Art (V-Mode) aufweist,
-- in dem das erste Meßrohr (18₁) und das zweite Meßrohr (18₂) bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen und
-- in dem das dritte Meßrohr (18₃) und das vierte Meßrohr (18₄) bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen, derart,
--- daß, bezüglich der zweiten gedachten Längsschnittebene (YZ), nämliche Biegeschwingungen des ersten Meßrohrs (18₁) auch gegengleich zu nämlichen Biegeschwingungen des dritten Meßrohrs (18₃) sind, und
--- daß, bezüglich der zweiten gedachten Längsschnittebene (YZ), nämliche Biegeschwingungen des zweiten Meßrohrs (18₂) auch gegengleich zu nämlichen Biegeschwingungen des vierten Meßrohrs (18₄) sind,
- und wobei die Erregeranordnung (5) derart ausgebildet ist, daß damit der Biegeschwingungsmode erster Art anregbar ist.

2. Meßaufnehmer nach Anspruch 1,
- wobei die Erregeranordnung derart ausgebildet ist, daß damit jedes der vier Meßrohre (18₁, 18₂, 18₃, 18₄), insb. simultan, zu Biegeschwingungen anregbar ist; und/oder
- wobei die Erregeranordnung derart ausgebildet ist, daß damit das erste Meßrohr (18₁) und das zweite Meßrohr (18₂) zu bezüglich der zweiten gedachten Längsschnittebene (YZ) gegengleichen, insb. zu bezüglich der zweiten gedachten Längsschnittebene (YZ) symmetrischen, Biegeschwingungen und das dritte Meßrohr (18₃) und das vierte Meßrohr (18₄) zu bezüglich der zweiten gedachten Längsschnittebene (YZ) gegengleichen, insb. zu bezüglich der zweiten gedachten Längsschnittebene (YZ) symmetrischen, Biegeschwingungen anregbar sind; und/oder
- wobei die Erregeranordnung derart ausgebildet ist, daß damit das erste Meßrohr (18₁) und das dritte Meßrohr (18₃) zu bezüglich der zweiten gedachten Längsschnittebene (YZ) gegengleichen, insb. zu bezüglich der zweiten gedachten Längsschnittebene (YZ) symmetrischen, Biegeschwingungen und das zweite Meßrohr (18₂) und das vierte Meßrohr (18₄) zu bezüglich der zweiten gedachten Längsschnittebene (YZ) gegengleichen, insb. zu bezüglich der zweiten gedachten Längsschnittebene (YZ) symmetrischen, Biegeschwingungen anregbar sind.

3. Meßaufnehmer nach einem der vorherigen Ansprüche,
- wobei die Rohranordnung einen natürlichen Biegeschwingungsmode zweiter Art (X-Mode) aufweist,
-- in dem das erste Meßrohr (18₁) und das zweite Meßrohr (18₂) bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen und
-- in dem das dritte Meßrohr (18₃) und das vierte Meßrohr (18₄) bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen, derart,
--- daß, bezüglich der zweiten gedachten Längsschnittebene (YZ), nämliche Biegeschwingungen des ersten Meßrohrs (18₁) auch gegengleich zu nämlichen Biegeschwingungen des vierten Meßrohrs (18₄) sind, und
--- daß, bezüglich der zweiten gedachten Längsschnittebene (YZ), nämliche Biegeschwingungen des zweiten Meßrohrs (18₂) auch gegengleich zu nämlichen Biegeschwingungen des dritten Meßrohrs (18₃) sind.

4. Meßaufnehmer nach dem vorherigen Anspruch, wobei die Erregeranordnung derart ausgebildet ist, daß damit der Biegeschwingungsmode zweiter Art, insb. simultan zum Biegeschwingungsmode erster Art, anregbar ist.

5. Meßaufnehmer nach einem der vorherigen Ansprüche, wobei die beiden Strömungsteiler (20₁, 20₂) so ausgebildet und im Meßaufnehmer angeordnet sind, daß eine erste gedachte Längsschnittebene (XZ₁) des Meßaufnehmers, innerhalb der die erste gedachte Verbindungsachse (Z₁) und die zweite gedachte Verbindungsachse (Z₂) verlaufen, parallel zu einer zweiten gedachten Längsschnittebene (XZ₂) des Meßaufnehmers, innerhalb der die gedachte dritte Verbindungsachse (Z₃) und die gedachte vierte Verbindungsachse (Z₄) verlaufen, ist, insb. derart, daß die erste gedachte Längsschnittebene (XZ) der Rohranordnung zwischen der ersten und zweiten gedachten Längsschnittebene (XZ₁, XZ₂) des Meßaufnehmers liegt und/oder parallel zur ersten und zweiten gedachten Längsschnittebene (XZ₁, XZ₂) des Meßaufnehmers ist.

6. Meßaufnehmer nach dem vorherigen Anspruch, wobei die beiden Strömungsteiler (20₁, 20₂) so ausgebildet und im Meßaufnehmer angeordnet sind, daß eine dritte gedachte Längsschnittebene (YZ₁) des Meßaufnehmers, innerhalb der die gedachte erste Verbindungsachse (Z₁) und die gedachte dritte Verbindungsachse (Z₃) verlaufen, parallel zu einer vierten gedachten Längsschnittebene (YZ₂) des Meßaufnehmers, innerhalb der die gedachte zweite Verbindungsachse (Z₂) und die gedachte vierte Verbindungsachse (Z₄) verlaufen, ist.

7. Meßaufnehmer nach dem vorherigen Anspruch, wobei die Meßrohre so ausgebildet und im Meßaufnehmer angeordnet sind, daß die zweite gedachte Längsschnittebene (YZ) der Rohranordnung zwischen der dritten gedachten Längsschnittebene (YZ₁) des Meßaufnehmers und der vierten gedachten Längsschnittebene (YZ₂) des Meßaufnehmers verläuft, insb. derart, daß die zweite gedachte Längsschnittebene (YZ) der Rohranordnung parallel zur dritten gedachten Längsschnittebene (YZ₁) des Meßaufnehmers und parallel zur vierten gedachten Längsschnittebene (YZ₂) des Meßaufnehmers ist.

8. Meßsystem nach einem der vorherigen Ansprüche, wobei jedes der vier Meßrohre (18₁, 18₂, 18₃, 18₄) jeweils einen Meßrohr-Scheitelpunkt, definiert als größter senkrechter Abstand des jeweiligen Meßrohres von der ersten gedachten Längsschnittebene (XZ), aufweist.

9. Meßsystem nach einem der vorherigen Ansprüche, wobei die Rohranordnung eine sowohl zur ersten gedachten Längsschnittebene (XZ) als auch zur zweiten gedachten Längsschnittebene (YZ) jeweils senkrechte gedachte Querschnittebene (XY) aufweist.

10. Meßaufnehmer nach dem vorherigen Anspruch,
- wobei ein Massenschwerpunkt der Rohranordnung in der gedachten Querschnittsebene (XY) liegt; und/oder
- wobei die Rohranordnung bezüglich der gedachten Querschnittsebene (XY) spiegelsymmetrisch ist; und/oder
- wobei jedes der vier Meßrohre (18₁, 18₂, 18₃, 18₄) jeweils einen Meßrohr-Scheitelpunkt, definiert als größter senkrechter Abstand des jeweiligen Meßrohres von der ersten gedachten Längsschnittebene (XZ), aufweist und die gedachte Querschnittsebene (XY) jedes der vier Meßrohre (18₁, 18₂, 18₃, 18₄) in dessen jeweiligen Meßrohr-Scheitelpunkt schneidet.

11. Meßaufnehmer nach einem der vorherigen Ansprüche, weiters umfassend
- ein, sowohl vom ersten Strömungsteiler als auch vom zweiten Strömungsteiler beabstandet, einlaßseitig an jedem der vier Meßrohre fixiertes erstes Kopplerelement (24₁) erster Art zum Einstellen von Eigenfrequenzen natürlicher Schwingungsmoden der Rohranordnung sowie
- ein, sowohl vom ersten Strömungsteiler als auch vom zweiten Strömungsteiler beabstandet, auslaßseitig an jedem der vier Meßrohre fixiertes zweites Kopplerelement (24₂) erster Art zum Einstellen von Eigenfrequenzen natürlicher Schwingungsmoden der Rohranordnung.

12. Meßaufnehmer nach dem vorherigen Anspruch, wobei sowohl das erste Kopplerelement (24₁) erster Art als auch das zweite Kopplerelement (24₂) erster Art jeweils mittels plattenförmiger Teilelemente gebildet ist.

13. Meßaufnehmer nach einem der Ansprüche 11 bis 12, weiters umfassend:
- ein, insb. plattenförmiges, erstes Kopplerelement (25₁) zweiter Art, das zum Bilden von einlaßseitigen Schwingungsknoten sowohl für Vibrationen, insb. Biegeschwingungen, des ersten Meßrohrs (18₁) als auch für dazu gegengleiche Vibrationen, insb. Biegeschwingungen, des zweiten Meßrohrs (18₂) einlaßseitig am ersten Meßrohr (18₁) und am zweiten Meßrohr (18₂) fixiert ist;
- ein, insb. plattenförmiges, zweites Kopplerelement (25₂) zweiter Art, das zum Bilden von auslaßseitigen Schwingungsknoten sowohl für Vibrationen, insb. Biegeschwingungen, des ersten Meßrohrs (18₁) als auch für dazu gegengleiche Vibrationen, insb. Biegeschwingungen, des zweiten Meßrohrs (18₂) auslaßseitig am ersten Meßrohr (18₁) und am zweiten Meßrohr (18₂) fixiert ist;
- ein, insb. plattenförmiges, drittes Kopplerelement (25₃) zweiter Art, das zum Bilden von einlaßseitigen Schwingungsknoten sowohl für Vibrationen, insb. Biegeschwingungen, des dritten Meßrohrs (18₃) als auch für dazu gegengleiche Vibrationen, insb. Biegeschwingungen, des vierten Meßrohrs (18₄) sowohl vom ersten Strömungsteiler als auch vom zweiten Strömungsteiler beabstandet einlaßseitig am dritten Meßrohr (18₃) und am vierten Meßrohr (18₄) fixiert ist; sowie
- ein, insb. plattenförmiges, viertes Kopplerelement (25₄) zweiter Art, das zum Bilden von auslaßseitigen Schwingungsknoten sowohl für Vibrationen, insb. Biegeschwingungen, des dritten Meßrohrs (18₃) als auch für dazu gegengleiche Vibrationen, insb. Biegeschwingungen, des vierten Meßrohrs (18₄) sowohl vom ersten Strömungsteiler als auch vom zweiten Strömungsteiler wie auch vom ersten Kopplerelement beabstandet auslaßseitig am dritten Meßrohr (18₃) und am vierten Meßrohr (18₄) fixiert ist.

14. Meßaufnehmer nach dem vorherigen Anspruch,
- wobei das erste Kopplerelement (25₁) zweiter Art sowohl an einem sich zwischen dem ersten Strömungsteiler (20i) und dem ersten Kopplerelement (24₁) erster Art erstreckenden Rohrsegment des ersten Meßrohrs (18₁) als auch an einem sich zwischen dem ersten Strömungsteiler (20₁) und dem ersten Kopplerelement (24₁) erster Art erstreckenden Rohrsegment des zweiten Meßrohrs (18₂) fixiert ist;
- wobei das zweite Kopplerelement (25₂) zweiter Art sowohl an einem sich zwischen dem zweiten Strömungsteiler (20₂) und dem zweiten Kopplerelement (24₂) erster Art erstreckenden Rohrsegment des ersten Meßrohrs (18₁) als auch an einem sich zwischen dem zweiten Strömungsteiler (20₂) und dem zweiten Kopplerelement (24₂) erster Art erstreckenden Rohrsegment des zweiten Meßrohrs (18₂) fixiert ist;
- wobei das dritte Kopplerelement (25₃) zweiter Art sowohl an einem sich zwischen dem ersten Strömungsteiler (20i) und dem ersten Kopplerelement (24₁) erster Art erstreckenden Rohrsegment des dritten Meßrohrs (18₃) als auch an einem sich zwischen dem ersten Strömungsteiler (20₁) und dem ersten Kopplerelement (24₁) erster Art erstreckenden Rohrsegment des vierten Meßrohrs (18₄) fixiert ist; und
- wobei das vierte Kopplerelement (25₄) zweiter Art sowohl an einem sich zwischen dem zweiten Strömungsteiler (20₂) und dem zweiten Kopplerelement (24₂) erster Art erstreckenden Rohrsegment des dritten Meßrohrs (18₃) als auch an einem sich zwischen dem zweiten Strömungsteiler (20₂) und dem zweiten Kopplerelement (24₁) erster Art erstreckenden Rohrsegment des vierten Meßrohrs (18₄) fixiert ist.

15. Meßaufnehmer nach einem der Ansprüche 13 bis 14,
- wobei eine einer Länge eines zwischen dem ersten Kopplerelement (25₁) zweiter Art und dem zweiten Kopplerelement (25₂) zweiter Art verlaufenden Abschnitts der Biegelinie entsprechende Nutz-Schwinglänge, L₁₈ₓ, des ersten Meßrohrs (18₁), insb. jedes der Meßrohre (18₁, 18₂, 18₃, 18₄), weniger als 3000 mm, insb. weniger als 2500 mm und/oder mehr als 800 mm, beträgt und
- wobei ein Kaliber-zu-Schwinglänge-Verhältnis, D₁₈/L₁₈ₓ, des Meßaufnehmers, definiert durch ein Verhältnis eines Kalibers, D₁₈, des ersten Meßrohrs (18₁) zur Nutz-Schwinglänge, L₁₈ₓ, des ersten Meßrohrs (18₁), mehr als 0.03, insb. mehr als 0.05 und/oder weniger als 0.15, beträgt.

16. Meßaufnehmer nach einem der vorherigen Ansprüche, wobei ein Mittelsegment (7_{1A}) des Aufnehmer-Gehäuses (7₁) zumindest anteilig mittels eines geraden, insb. kreiszylindrischen, Trägerrohres gebildet ist.

17. Meßaufnehmer nach einem der vorherigen Ansprüche,
- wobei jedes der vier, insb. gleichgroßen, Meßrohre (18₁, 18₂, 18₃, 18₄) ein Kaliber, D₁₈, aufweist, das mehr als 40 mm, insb. mehr als 60 mm, beträgt und
- wobei die Meßrohre (18₁, 18₂, 18₃, 18₄) so gebogen und so angeordnet sind, daß ein Kaliber-zu-Höhe-Verhältnis, D₁₈/Q₁₈, der Rohranordnung, definiert durch ein Verhältnis des Kalibers, D₁₈, des ersten Meßrohrs zu einer maximalen seitlichen Ausdehnung, Q₁₈, der Rohranordnung, gemessen von einem Scheitelpunkt des ersten Meßrohrs (18₁) zu einem Scheitelpunkt des dritten Meßrohrs (18₃), mehr als 0.05, insb. mehr als 0.07 und/oder weniger als 0.35, insb. weniger als 0.2, beträgt.

18. Meßaufnehmer nach einem der vorherigen Ansprüche,
- wobei die Sensoranordnung (19) mittels eines einlaßseitigen ersten Schwingungssensors (19₁) sowie eines auslaßseitigen zweiten Schwingungssensors (19₂) gebildet ist und
- wobei die Sensoranordnung (19) mittels eines einlaßseitigen dritten Schwingungssensors (19₃) sowie eines auslaßseitigen vierten Schwingungssensors (19₄) gebildet ist.

19. Meßaufnehmer nach dem vorherigen Anspruch,
- wobei der erste und dritte Schwingungssensor (19₁, 19₃) elektrisch seriell verschaltet sind, derart, daß ein gemeinsames Schwingungssignal gemeinsame einlaßseitige Schwingungen des ersten und dritten Meßrohrs (18₁, 18₃) relativ zum zweiten und vierten Meßrohr (18₂, 18₄) repräsentiert und
- wobei der zweite und vierte Schwingungssensor (19₂, 19₄) elektrisch seriell verschaltet sind, derart, daß ein gemeinsames Schwingungssignal gemeinsame auslaßseitige Schwingungen des ersten und dritten Meßrohrs (18₁, 18₃) relativ zum zweiten und vierten Meßrohr (18₂, 18₄) repräsentiert.

20. Meßaufnehmer nach einem der vorherigen Ansprüche, wobei ein Material, aus dem die Rohrwände der vier Meßrohre (18₁, 18₂, 18₃, 18₄) zumindest anteilig bestehen, Edelstahl ist.

21. Meßaufnehmer nach einem der Ansprüche 1 bis 19, wobei das Aufnehmer-Gehäuse (7₁), die Strömungsteiler (20₁, 20₂) und Rohrwände der Meßrohre (18₁, 18₂, 18₃, 18₄) jeweils aus, insb. rostfreiem und/oder hochfestem, Stahl bestehen.

22. Meßsystem zum Messen einer Dichte und/oder einer Massendurchflußrate eines in einer Rohrleitung zumindest zeitweise strömenden Mediums, welches Meßsystem einen Meßaufnehmer gemäß einem der Ansprüche 1 bis 21 sowie eine mit dem Meßaufnehmer elektrisch gekoppelte Umformer-Elektronik zum Ansteuern des Meßaufnehmers und zum Auswerten von vom Meßaufnehmer gelieferten Schwingungssignalen umfaßt.

23. Meßsystem nach Anspruch 22, wobei die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert.

24. Meßsystem nach einem der Ansprüche 22 bis 23, wobei die Erregeranordnung (5) wenigstens einen, insb. differentiell, auf das erste und zweite Meßrohr (18₁, 18₂) wirkenden ersten Schwingungserreger (5₁) zum Konvertieren von mittels der Umformer-Elektronik (12) in die Erregeranordnung (5) eingespeister elektrischer Erregerleistung in Biegeschwingungen des ersten Meßrohrs (18₁) und in zu nämlichen Biegeschwingungen des ersten Meßrohrs (18₁) bezüglich der zweiten gedachten Längsschnittebene (YZ) der Rohranordnung gegengleiche Biegeschwingungen des zweiten Meßrohrs (18₂) bewirkende mechanische Erregerkräfte aufweist.

25. Meßsystem nach Anspruch 24, wobei die Erregeranordnung (5) weiters einen auf das dritte und vierte Meßrohr (18₃, 18₄) wirkenden, insb. zum ersten Schwingungserreger (5₁) baugleichen, zweiten Schwingungserreger (5₂) zum Konvertieren von mittels der Umformer-Elektronik (12) in die Erregeranordnung (5) eingespeister elektrischer Erregerleistung in Biegeschwingungen des dritten Meßrohrs (18₃) und zu nämlichen Biegeschwingungen des dritten Meßrohrs (18₃) bezüglich der zweiten gedachten Längsschnittebene (YZ) der Rohranordnung gegengleiche Biegeschwingungen des vierten Meßrohrs (18₄) bewirkende mechanische Erregerkräfte aufweist.

26. Meßsystem nach einem der Ansprüche 22 bis 25,
- wobei die Umformer-Elektronik (12) mittels wenigstens eines, insb. mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten elektrischen Treibersignals, insb. mit einer veränderlichen maximalen Spannungshöhe und/oder einer veränderlichen maximalen Stromstärke, elektrische Erregerleistung in die Erregeranordnung einspeist; und
- wobei die Erregeranordnung die, insb. von einer Spannungshöhe und einer Stromstärke des wenigstens einen Treibersignals abhängige, elektrische Erregerleistung zumindest anteilig sowohl in Biegeschwingungen des ersten Meßrohrs (18₁) und zu den Biegeschwingungen des ersten Meßrohrs (18₁) bezüglich der zweiten gedachten Längsschnittebene (YZ) der Rohranordnung gegengleiche Biegeschwingungen des zweiten Meßrohrs (18₂) als auch in Biegeschwingungen des dritten Meßrohrs (18₃) und zu den Biegeschwingungen des dritten Meßrohrs (18₃) bezüglich der zweiten gedachten Längsschnittebene (YZ) der Rohranordnung gegengleiche Biegeschwingungen des vierten Meßrohrs (18₄) wandelt.

27. Meßsystem nach Anspruch 26,
- wobei das wenigstens eine Treibersignal eine Vielzahl von Signalkomponenten mit voneinander verschiedener Signalfrequenz aufweist, und
- wobei wenigstens eine der Signalkomponenten, insb. eine hinsichtlich einer Signalleistung dominierende Signalkomponente, des ersten Treibersignals eine einer Eigenfrequenz eines natürlichen Schwingungsmodes der Rohranordnung, insb. des Biegeschwingungsmodes erster Art, in dem jedes der vier Meßrohre (18₁, 18₂, 18₃, 18₄) Biegeschwingungen ausführt, entsprechende Signalfrequenz aufweist.

28. Verwenden eines Meßaufnehmers gemäß einem der Ansprüche 1 bis 21 oder eines Meßsystems gemäß einem der Ansprüche 22 bis 27 zum Messen einer Massendurchflußrate eines in einer Prozeßleitung zumindest zeitweise mit einer Massendurchflußrate von mehr als 1000 t/h strömenden Mediums.

## Claims

1. Vibronic-type sensor designed to measure at least a physical measured variable of a medium which can flow and is conducted in a pipe, said sensor comprising:
- a sensor housing (7₁), wherein a first housing end on the inlet side consists of a first flow divider (20₁), on the inlet side, having precisely four flow openings (20_{1A}, 20_{1B}, 20_{1C}, 20_{1D}) spaced at a distance from one another, and a second housing end on the outlet side consists of a second flow divider (20₂), on the outlet side, having precisely four flow openings (20_{2A}, 20_{2B}, 20_{2C}, 20_{2D}) spaced at a distance from one another;
- a tube arrangement with precisely four measuring tubes (18₁, 18₂, 18₃, 18₄) which are curved, particularly at least partially V-shaped or at least partially arc-shaped, said tubes being connected to flow dividers (20₁, 20₂) and forming flow paths which are coupled in parallel from a flow perspective, wherein said tubes are designed to conduct flowing medium, wherein of said measuring tubes
--- a first measuring tube (18₁) enters into a first flow opening (20_{1A}) of the first flow divider (20₁) with a first measuring tube end on the inlet side and enters into a first flow opening (20_{2A}) of the second flow divider (20₂) with a second measuring tube end on the outlet side,
--- a second measuring tube (18₂) enters into a second flow opening (20_{1B}) of first flow divider (20₁) with a first measuring tube end on the inlet side and enters into a second flow opening (20_{2B}) of the second flow divider (20₂) with a second measuring tube end on the outlet side,
--- a third measuring tube (18₃) enters into a third flow opening (20_{1C}) of the first flow divider (20₁) with a first measuring tube end on the inlet side and enters into a third flow opening (20_{2C}) of the second flow divider (20₂) with a second measuring tube end on the outlet side,
--- a fourth measuring tube (18₄) enters into a fourth flow opening (20_{1D}) of the first flow divider (20₁) with a first measuring tube end on the inlet side and enters into a fourth flow opening (20_{2D}) of the second flow divider (20₂) with a second measuring tube end on the outlet side,
- an electromechanical exciter arrangement (5) for generating and/or maintaining flexural vibrations of each of the four measuring tubes (18₁, 18₂, 18₃, 18₄), said vibrations corresponding particularly to a natural flexural vibration mode of the tube arrangement;
- as well as a sensor arrangement (19) reacting to vibrations of the measuring tubes (18₁, 18₂, 18₃, 18₄), said sensor arrangement being designed to generate vibration signals representing vibrations of the measuring tubes (18₁, 18₂, 18₃, 18₄);
- wherein the two flow dividers (20₁, 20₂) are designed and arranged in the sensor in such a way
-- that a first imaginary connecting axis (Z₁) of the sensor, which connects in an imaginary manner the first flow opening (20_{1A}) of the first flow divider (20₁) to the first flow opening (20_{2A}) of the second flow divider (20₂), runs parallel to a second imaginary connecting axis (Z₂) of the sensor, which connects in an imaginary manner the second flow opening (20_{1B}) of the first flow divider (20₁) to the second flow opening (20_{2B}) of the second flow divider (20₂), and
-- that a third imaginary connecting axis (Z₃) of the sensor, which connects in an imaginary manner the third flow opening (20_{1C}) of the first flow divider (20₁) to the third flow opening (20_{2C}) of the second flow divider (20₂), runs parallel to a fourth imaginary connecting axis (Z₄) of the sensor, which connects in an imaginary manner the fourth flow opening (20_{1D}) of the first flow divider (20₁) to the fourth flow opening (20_{2D}) of the second flow divider (20₂), and
- wherein the measuring tubes (18₁, 18₂, 18₃, 18₄) are designed and arranged in the sensor in such a way that
-- the tube arrangement has a first imaginary longitudinal section plane (XZ), which is situated both between the first measuring tube (18₁) and the third measuring tube (18₃), and between the second measuring tube (18₂) and the fourth measuring tube (18₄), wherein the tube arrangement is mirror-symmetric with regard to said plane, and
-- the tube arrangement has a second imaginary longitudinal section plane (YZ), which is perpendicular to the first imaginary longitudinal section plane (XZ) and is situated both between the first measuring tube (18₁) and the second measuring tube (18₂), and between the third measuring tube (18₃) and the fourth measuring tube (18₄), wherein the tube arrangement is also mirror-symmetric with regard to said plane,
- wherein the tube arrangement has a natural flexural vibration mode of the first type (V-mode),
-- in which the first measuring tube (18₁) and the second measuring tube (18₂) produce flexural vibrations which are mirror-inverted with respect to the second imaginary longitudinal section plane (YZ), particularly symmetrical flexural vibrations in relation to the second imaginary longitudinal section plane (YZ), around a static rest position associated with the respective measuring tube, and
-- in which the third measuring tube (18₃) and the fourth measuring tube (18₄) produce flexural vibrations which are mirror-inverted with respect to the second imaginary longitudinal section plane (YZ), particularly symmetrical flexural vibrations in relation to the second imaginary longitudinal section plane (YZ), around a static rest position associated with the respective measuring tube, in such a way that
--- with regard to the second imaginary longitudinal section plane (YZ), said flexural vibrations of the first measuring tube (18₁) are also mirror-inverted with respect to said flexural vibrations of the third measuring tube (18₃), and
--- with regard to the second imaginary longitudinal section plane (YZ), said flexural vibrations of the second measuring tube (18₂) are also mirror-inverted with respect to said flexural vibrations of the fourth measuring tube (18₄),
- and wherein the exciter arrangement (5) is designed in such a way that the flexural vibration mode of the first type can be induced with said arrangement.

2. Sensor as claimed in Claim 1,
- wherein the exciter arrangement is designed in such a way that each of the four measuring tubes (18₁, 18₂, 18₃, 18₄) can be excited with it, particularly simultaneously, to produce flexural vibrations; and/or
- wherein the exciter arrangement is designed in such a way that the first measuring tube (18₁) and the second measuring tube (18₂) can be excited to produce flexural vibrations that are mirror-inverted with respect to the second imaginary longitudinal section plane (YZ), and in particular are symmetrical in relation to the second imaginary longitudinal section plane (YZ), and the third measuring tube (18₃) and the fourth measuring tube (18₄) can be excited to produce flexural vibrations that are mirror-inverted with respect to the second imaginary longitudinal section plane (YZ), and in particular are symmetrical in relation to the second imaginary longitudinal section plane (YZ); and/or
- wherein the exciter arrangement is designed in such a way that the first measuring tube (18₁) and the third measuring tube (18₃) can be excited to produce flexural vibrations that are mirror-inverted with respect to the second imaginary longitudinal section plane (YZ), and in particular are symmetrical in relation to the second imaginary longitudinal section plane (YZ), and the second measuring tube (18₂) and the fourth measuring tube (18₄) can be excited to produce flexural vibrations that are mirror-inverted with respect to the second imaginary longitudinal section plane (YZ), and in particular are symmetrical in relation to the second imaginary longitudinal section plane (YZ).

3. Sensor as claimed in one of the previous claims,
- wherein the tube arrangement has a natural flexural vibration mode of the second type (X- mode),
-- in which the first measuring tube (18₁) and the second measuring tube (18₂) produce flexural vibrations which are mirror-inverted with respect to the second imaginary longitudinal section plane (YZ), particularly symmetrical flexural vibrations in relation to the second imaginary longitudinal section plane (YZ), around a static rest position associated with the respective measuring tube, and
-- in which the third measuring tube (18₃) and the fourth measuring tube (18₄) produce flexural vibrations which are mirror-inverted with respect to the second imaginary longitudinal section plane (YZ), particularly symmetrical flexural vibrations in relation to the second imaginary longitudinal section plane (YZ), around a static rest position associated with the respective measuring tube, in such a way that
--- with regard to the second imaginary longitudinal section plane (YZ), said flexural vibrations of the first measuring tube (18₁) are also mirror-inverted with respect to said flexural vibrations of the fourth measuring tube (18₄), and
--- with regard to the second imaginary longitudinal section plane (YZ), said flexural vibrations of the second measuring tube (18₂) are also mirror-inverted with respect to said flexural vibrations of the third measuring tube (18₃).

4. Sensor as claimed in the previous claim, wherein the exciter arrangement is designed in such a way that the flexural vibration mode of the second type can be induced, particularly simultaneously with the flexural vibration mode of the first type.

5. Sensor as claimed in one of the previous claims, wherein the two flow dividers (20₁, 20₂) are designed and arranged in the sensor in such a way that a first imaginary longitudinal section plane (XZ₁) of the sensor, within which the first imaginary connecting axis (Z₁) and the second imaginary connecting axis (Z₂) run, is parallel to a second imaginary longitudinal section plane (XZ₂) of the sensor, within which the third imaginary connecting axis (Z₃) and the fourth imaginary connecting axis (Z₄) run, particularly in such a way that the first imaginary longitudinal section plane (XZ) of the tube arrangement is situated between the first and the second imaginary longitudinal section plane (XZ₁, XZ₂) of the sensor, and/or is parallel to the first and second imaginary longitudinal section plane (XZ₁, XZ₂) of the sensor.

6. Sensor as claimed in the previous claim, wherein the two flow dividers (20₁, 20₂) are designed and arranged in the sensor in such a way that a third imaginary longitudinal section plane (YZ₁) of the sensor, within which the first imaginary connecting axis (Z₁) and the third imaginary connecting axis (Z₃) run, is parallel to a fourth imaginary longitudinal section plane (YZ₂) of the sensor, within which the second imaginary connecting axis (Z₂) and the fourth imaginary connecting axis (Z₄) run.

7. Sensor as claimed in the previous claim, wherein the measuring tubes are designed and arranged in the sensor in such a way that the second imaginary longitudinal section plane (YZ) of the tube arrangement extends between the third imaginary longitudinal section plane (YZ₁) of the sensor and the fourth imaginary longitudinal section plane (YZ₂) of the sensor, particularly in such a way that the second imaginary longitudinal section plane (YZ) of the tube arrangement is parallel to the third imaginary longitudinal section plane (YZ₁) of the sensor and parallel to the fourth imaginary longitudinal section plane (YZ₂) of the sensor.

8. Measuring system as claimed in one of the previous claims, wherein each of the four measuring tubes (18₁, 18₂, 18₃, 18₄) has a measuring tube vertex, defined as the largest perpendicular distance between the respective measuring tube and the first imaginary longitudinal section plane (XZ).

9. Measuring system as claimed in one of the previous claims, wherein the tube arrangement has an imaginary cross-sectional plane (XY) perpendicular to both the first imaginary longitudinal section plane (XZ) and to the second imaginary longitudinal section plane (YZ).

10. Sensor as claimed in the previous claim,
- wherein a center of gravity of the tube arrangement is situated in the imaginary cross-sectional plane (XY);
and/or
- wherein the tube arrangement is in mirror symmetry in relation to the imaginary cross-sectional plane (XY); and/or
- wherein each of the four measuring tubes (18₁, 18₂, 18₃, 18₄) has a measuring tube vertex, defined as the largest perpendicular distance between the respective measuring tube and the first imaginary longitudinal section plane (XZ), and intersects the imaginary cross-sectional plane (XY) of each of the four measuring tubes (18₁, 18₂, 18₃, 18₄) at their respective measuring tube vertex.

11. Sensor as claimed in one of the previous claims, further comprising
- a first coupling element (24₁) of the first type located on the inlet side on each of the four measuring tubes and spaced at a distance from both the first flow divider and the second flow divider, said coupling element being designed to set natural frequencies of natural vibration modes of the tube arrangement
- a second coupling element (24₂) of the first type located on the outlet side on each of the four measuring tubes and spaced at a distance from both the first flow divider and the second flow divider, said coupling element being designed to set natural frequencies of natural vibration modes of the tube arrangement.

12. Sensor as claimed in the previous claim, wherein both the first coupling element (24₁) of the first type and the second coupling element (24₂) of the first type are formed in each case by plate-shaped partial elements.

13. Sensor as claimed in one of the Claims 11 to 12, further comprising:
- a first coupling element (25₁) of the second type, particularly plate-shaped, said first coupling element being fixed on the inlet side on the first measuring tube (18₁) and on the second measuring tube (18₂), for the formation of nodes on the inlet side both for vibrations, particularly flexural vibrations, of the first measuring tube (18₁), and for mirror-inverted vibrations, particularly flexural vibrations, of the second measuring tube (18₂);
- a second coupling element (25₂) of the second type, particularly plate-shaped, said second coupling element being fixed on the outlet side on the first measuring tube (18₁) and on the second measuring tube (18₂), for the formation of nodes on the outlet side both for vibrations, particularly flexural vibrations, of the first measuring tube (18₁), and for mirror-inverted vibrations, particularly flexural vibrations, of the second measuring tube (18₂);
- a third coupling element (25₃) of the second type, particularly plate-shaped, said third coupling element being fixed on the inlet side on the third measuring tube (18₃) and on the fourth measuring tube (18₄), for the formation of nodes on the inlet side for both vibrations, particularly flexural vibrations, of the third measuring tube (18₃), and for mirror-inverted vibrations, particularly flexural vibrations, of the fourth measuring tube (18₄), spaced at a distance from both the first flow divider and the second flow divider; and
- a fourth coupling element (25₄) of the second type, particularly plate-shaped, said fourth coupling element being fixed on the outlet side on the third measuring tube (18₃) and on the fourth measuring tube (18₄), for the formation of nodes on the outlet side for both vibrations, particularly flexural vibrations, of the third measuring tube (18₃), and for mirror-inverted vibrations, particularly flexural vibrations, of the fourth measuring tube (18₄), spaced at a distance from both the first flow divider and the second flow divider and also from the first coupling element.

14. Sensor as claimed in the previous claim
- wherein the first coupling element (25₁) of the second type is fixed on both a tube segment of the first measuring tube (18₁) extending between the first flow divider (20₁) and the first coupling element (24₁) of the first type and on a tube segment of the second measuring tube (18₂) extending between the first flow divider (20₁) and the first coupling element (24₁) of the first type;
- wherein the second coupling element (25₂) of the second type is fixed on both a tube segment of the first measuring tube (18₁) extending between the second flow divider (20₂) and the second coupling element (24₂) of the first type and on a tube segment of the second measuring tube (18₂) extending between the second flow divider (20₂) and the second coupling element (24₂) of the first type;
- wherein the third coupling element (25₃) of the second type is fixed on both a tube segment of the third measuring tube (18₃) extending between the first flow divider (20₁) and the first coupling element (24₁) of the first type and on a tube segment of the fourth measuring tube (18₄) extending between the first flow divider (20₁) and the first coupling element (24₁) of the first type;
- wherein the fourth coupling element (25₄) of the second type is fixed on both a tube segment of the third measuring tube (18₃) extending between the second flow divider (20₂) and the second coupling element (24₂) of the first type and on a tube segment of the fourth measuring tube (18₄) extending between the second flow divider (20₂) and the second coupling element (24₂) of the first type;

15. Sensor as claimed in one of the Claims 13 to 14,
- wherein an effective vibration length, L₁₈ₓ, of the first measuring tube (18₁), particularly of each of the measuring tubes (18₁, 18₂, 18₃, 18₄), corresponding to a length of a section of the bending line extending between the first coupling element (25₁) of the second type and the second coupling element (25₂) of the second type, is less than 3000 mm, particularly less than 2500 mm and/or greater than 800 mm, and
- wherein a caliber-to-vibration length ratio, D₁₈/L₁₈, of the sensor, defined by a ratio of the caliber, D₁₈, of the first measuring tube (18₁) to the effective vibration length, L₁₈ₓ, of the first measuring tube (18₁), is greater than 0.03, particularly greater than 0.05 and/or less than 0.15.

16. Sensor as claimed in one of the previous claims, wherein a central segment (7_{1A}) of the sensor housing (7₁) is formed at least partially by a straight, particularly circular cylindrical, support tube.

17. Sensor as claimed in one of the previous claims,
- wherein each of the four measuring tubes (18₁, 18₂, 18₃, 18₄), particularly of equal size, has a caliber, D₁₈, which is greater than 40 mm, particularly greater than 60 mm, and
- wherein the measuring tubes (18₁, 18₂, 18₃, 18₄) are curved and arranged in such a way that a caliber-to-height ratio, D₁₈/Q₁₈, of the tube arrangement, defined by a ratio of the caliber, D₁₈, of the first measuring tube to a maximum lateral extension, Q₁₈, of the tube arrangement, measured from a vertex of the first measuring tube (18₁) to a vertex of the third measuring tube (18₃), is greater than 0.05, particularly greater than 0.07 and/or less than 0.35, particularly less than 0,2.

18. Sensor as claimed in one of the previous claims,
- wherein the sensor arrangement (19) is formed by a first vibration sensor (19₁) on the inlet side and a second vibration sensor (19₂) on the outlet side, and
- wherein the sensor arrangement (19) is formed by a third vibration sensor (19₃) on the inlet side and a fourth vibration sensor (19₄) on the outlet side.

19. Sensor as claimed in the previous claim,
- wherein the first and the third vibration sensor (19₁, 19₃) are electrically coupled in series in such a way that a common vibration signal represents common vibrations, on the inlet side, of the first and third measuring tube (18₁, 18₃) in relation to the second and fourth measuring tube (18₂, 18₄), and
- wherein the second and the fourth vibration sensor (19₂,19₄) are electrically coupled in series in such a way that a common vibration signal represents common vibrations, on the outlet side, of the first and third measuring tube (18₁, 18₃) in relation to the second and fourth measuring tube (18₂, 18₄).

20. Sensor as claimed in one of the previous claims, wherein a material from which the walls of the four measuring tubes (18₁, 18₂, 18₃, 18₄) are at least partially made, is stainless steel.

21. Sensor as claimed in one of the Claims 1 to 19, wherein the sensor housing (7₁), the flow dividers (20₁, 20₂) and the les walls of the measuring tubes (18₁, 18₂, 18₃, 18₄) are made from a steel, particularly a stainless steel and/or a high-strength steel.

22. Measuring system designed to measure a density and/or a mass flow rate of a medium flowing at least temporarily in a pipe, wherein said measuring system comprises a sensor as claimed in one of the Claims 1 to 21 as well as a transmitter electronics unit electrically coupled with the sensor and designed to control the sensor and evaluate vibration signals delivered by the sensor.

23. Measuring system as claimed in Claim 22, wherein - using vibration signals delivered by the sensor - the transmitter electronics unit generates a mass flow measured value representing the mass flow rate of the flowing medium and/or a density measured value representing the density of the flowing medium.

24. Measuring system as claimed in one of the Claims 22 to 23, wherein the exciter arrangement (5) has at least a first vibration exciter (5₁) acting, particularly in a differential manner, on the first and the second measuring tube (18₁, 18₂), said first vibration exciter being designed to convert electrical excitation power, fed into the exciter arrangement (5) by means of the transmitter electronics unit (12), into flexural vibrations of the first measuring tube (18₁) and into mechanical excitation forces that cause flexural vibrations of the second measuring tube (18₂), said vibrations being mirror-inverted with respect to said flexural vibrations of the first measuring tube (18₁) in relation to the second imaginary longitudinal section plane (YZ) of the tube arrangement.

25. Measuring system as claimed in Claim 24, wherein the exciter arrangement (5) further comprises a second vibration exciter (5₂) acting on the third and fourth measuring tube (18₃, 18₄), and particularly identical in design to the first vibration exciter (5₁), wherein said second vibration exciter is designed to convert electrical excitation power, fed into the exciter arrangement (5) by means of the transmitter electronics unit (12), into flexural vibrations of the third measuring tube (18₃) and into mechanical excitation forces that cause flexural vibrations of the fourth measuring tube (18₄), said vibrations being mirror-inverted with respect to said flexural vibrations of third measuring tube (18₃) in relation to the second imaginary longitudinal section plane (YZ) of the tube arrangement.

26. Measuring system as claimed in one of the Claims 22 to 25,
- wherein the transmitter electronics unit (12) feeds electrical excitation power into the exciter arrangement with at least an electrical driver signal supplied to the exciter arrangement, particularly with at least a signal frequency corresponding to a natural frequency of a natural vibration mode of the tube arrangement, said signal frequency being variable and/or at least temporarily periodic, said driver signal particularly having a variable maximum voltage level and/or a variable maximum current intensity; and
- wherein the exciter arrangement converts the electrical excitation power, depending, in particular, on a voltage level and a current intensity of the at least one driver signal, at least partially both to flexural vibrations of the first measuring tube (18₁) and to flexural vibrations of the second measuring tube (18₂) which are mirror-inverted with respect to the flexural vibrations of the first measuring tube (18₁) in relation to the second imaginary longitudinal section plane (YZ) of the tube arrangement, and also to flexural vibrations of the third measuring tube (18₃) and to flexural vibrations of the fourth measuring tube (18₄) which are mirror-inverted with respect to the flexural vibrations of the third measuring tube (18₃) in relation to the second longitudinal section plane (YZ) of the tube arrangement.

27. Measuring system as claimed in Claim 26,
- wherein the at least one driver signal has a large number of signal components with signal frequencies that differ from one another, and
- wherein at least one of the signal components, particularly a signal component that dominates in relation to a signal power, of the first driver signal has a signal frequency corresponding to a natural frequency of a natural vibration mode of the tube arrangement, particularly of the flexural vibration mode of the first type, in which each of the four measuring tubes (18₁, 18₂, 18₃, 18₄) produces flexural vibrations.

28. Use of a sensor as claimed in one of the Claims 1 to 21, or a measuring system as claimed in one of the Claims 22 to 27, to measure a mass flow rate of a medium flowing through a process pipe at least temporarily at a mass flow rate of more than 1000 t/h.

## Revendications

1. Capteur du type à vibrations destiné à la mesure d'au moins une grandeur physique d'un produit apte à s'écouler, guidé dans une conduite, lequel capteur comprend :
- un boîtier de capteur (7₁), à partir duquel une première extrémité de boîtier, côté entrée, est constituée d'un premier diviseur d'écoulement (20₁), côté entrée, comportant exactement quatre ouvertures d'écoulement (20_{1A}, 20_{1B}, 20_{1C}, 20_{1D}) espacées les unes des autres, et une deuxième extrémité de boîtier, côté sortie, constituée d'un deuxième diviseur d'écoulement (20₂), côté sortie, comportant exactement quatre ouvertures d'écoulement (20_{2A}, 20_{2B}, 20_{2C}, 20_{2D}) espacées les unes des autres ;
- un agencement de tubes avec exactement quatre tubes de mesure (18₁, 18₂, 18₃, 18₄) coudés, notamment au moins partiellement en forme de V ou au moins partiellement en forme d'arc de cercle, raccordés aux diviseurs d'écoulement (20₁, 20₂) en formant des chemins d'écoulement couplés en parallèle, lesquels tubes sont destinés à guider le produit en écoulement, parmi lesquels
--- un premier tube de mesure (18₁) débouche avec une première extrémité de tube de mesure côté entrée dans une première ouverture d'écoulement (20_{1A}) du premier diviseur de débit (20₁) et avec une deuxième extrémité de tube de mesure côté sortie dans une première ouverture d'écoulement (20_{2A}) du deuxième diviseur de débit (20₂),
--- un deuxième tube de mesure (18₂) débouche avec une première extrémité de tube de mesure côté entrée dans une deuxième ouverture d'écoulement (20_{1B}) du premier diviseur de débit (20₁) et avec une deuxième extrémité de tube de mesure côté sortie dans une deuxième ouverture d'écoulement (20_{2B}) du deuxième diviseur de débit (20₂),
--- un troisième tube de mesure (18₃) débouche avec une première extrémité de tube de mesure côté entrée dans une troisième ouverture d'écoulement (20_{1C}) du premier diviseur de débit (20₁) et avec une deuxième extrémité de tube de mesure côté sortie dans une troisième ouverture d'écoulement (20_{2C}) du deuxième diviseur de débit (20₂), et
--- un quatrième tube de mesure (18₄) débouche avec une première extrémité de tube de mesure côté entrée dans une quatrième ouverture d'écoulement (20_{1D}) du premier diviseur de débit (20₁) et avec une deuxième extrémité de tube de mesure côté sortie dans une quatrième ouverture d'écoulement (20_{2D}) du deuxième diviseur de débit (20₂),
-- un circuit d'excitation électromécanique (5) destiné à générer et/ou à maintenir les vibrations de flexion de chacun des quatre tubes de mesure (18₁, 18₂, 18₃, 18₄), lesquelles vibrations correspondent notamment à un mode de vibration de flexion naturel de l'agencement de tubes de mesure ;
- ainsi qu'un agencement de capteurs (19) réagissant aux vibrations des tubes de mesure (18₁, 18₂, 18₃, 18₄), lequel agencement de capteurs est destiné à générer des signaux de vibration représentant les vibrations des tubes de mesure (18₁, 18₂, 18₃, 18₄) ;
- les deux diviseurs d'écoulement (20₁, 20₂) étant conçus et disposés dans le capteur, de telle sorte
-- qu'un premier axe de liaison imaginaire (Z₁) du capteur, lequel axe relie de façon imaginaire la première ouverture d'écoulement (20_{1A}) du premier diviseur d'écoulement (20₁) avec la première ouverture d'écoulement (20_{2A}) du deuxième diviseur d'écoulement (20₂), s'étend parallèlement à un deuxième axe de liaison imaginaire (Z₂) du capteur, lequel axe relie de façon imaginaire la deuxième ouverture d'écoulement (20_{1B}) du premier diviseur d'écoulement (20₁) avec la deuxième ouverture d'écoulement (20_{2B}) du deuxième diviseur d'écoulement (20₂), et
-- qu'un troisième axe de liaison imaginaire (Z₃) du capteur, lequel axe relie de façon imaginaire la troisième ouverture d'écoulement (20_{1C}) du premier diviseur d'écoulement (20₁) avec la troisième ouverture d'écoulement (20_{2C}) du deuxième diviseur d'écoulement (20₂), s'étend parallèlement à un quatrième axe de liaison imaginaire (Z₄) du capteur, lequel axe relie de façon imaginaire la quatrième ouverture d'écoulement (20_{1D}) du premier diviseur d'écoulement (20₁) avec la quatrième ouverture d'écoulement (20_{2D}) du deuxième diviseur d'écoulement (20₂), et
- les tubes de mesure (18₁, 18₂, 18₃, 18₄) étant conçus et disposés dans le capteur, de telle sorte
-- que l'agencement de tubes présente un premier plan en coupe longitudinal imaginaire (XZ), qui se situe à la fois entre le premier tube de mesure (18₁) et le troisième tube de mesure (18₃), et entre le deuxième tube de mesure (18₂) et le quatrième tube de mesure (18₄), plan par rapport auquel l'agencement de tubes est en symétrie spéculaire, et
-- que l'agencement de tube présente un deuxième plan en coupe longitudinal imaginaire (YZ), lequel est perpendiculaire au premier plan en coupe longitudinal imaginaire (XZ) et qui se situe à la fois entre le premier tube de mesure (18₁) et le deuxième tube de mesure (18₂), et entre le troisième tube de mesure (18₃) et le quatrième tube de mesure (18₄), plan par rapport auquel l'agencement de tubes est également en symétrie spéculaire,
- l'agencement de tubes présentant un mode de vibration de flexion naturel de premier type (mode V),
-- dans lequel le premier tube de mesure (18₁) et le deuxième tube de mesure (18₂) exécutent par rapport au deuxième plan en coupe longitudinal imaginaire (YZ) des vibrations de flexion diamétralement opposées, notamment symétriques par rapport au deuxième plan en coupe longitudinal imaginaire (YZ), autour d'une position de repos statique associée au tube de mesure respectif, et
-- dans lequel le troisième tube de mesure (18₃) et le quatrième tube de mesure (18₄) exécutent par rapport au deuxième plan en coupe longitudinal imaginaire (YZ) des vibrations de flexion diamétralement opposées, notamment symétriques par rapport au deuxième plan en coupe longitudinal imaginaire (YZ), autour d'une position de repos statique associée au tube de mesure respectif, de telle sorte
--- que, par rapport au deuxième plan en coupe longitudinal imaginaire (YZ), les vibrations de flexion du premier tube de mesure (18₁) sont également diamétralement opposées aux vibrations de flexion du troisième tube de mesure (18₃), et
--- que, par rapport au deuxième plan en coupe longitudinal imaginaire (YZ), les vibrations de flexion du deuxième tube de mesure (18₂) sont également diamétralement opposées aux vibrations de flexion du quatrième tube de mesure (18₄),
- et le circuit d'excitation (5) étant conçu de telle sorte à ce qu'il permette d'exciter le mode de vibration de flexion de premier type.

2. Capteur selon la revendication 1,
- pour lequel le circuit d'excitation est conçu de telle sorte à ce qu'il permette d'exciter chacun des quatre tubes de mesure (18₁, 18₂, 18₃, 18₄), notamment simultanément, en vibrations de flexion ; et/ou
- pour lequel le circuit d'excitation est conçu de telle sorte à ce qu'il permette d'exciter le premier tube de mesure (18₁) et le deuxième tube de mesure (18₂) en vibrations de flexion diamétralement opposées par rapport au deuxième plan en coupe longitudinal imaginaire (YZ), notamment symétriques par rapport au deuxième plan en coupe longitudinal imaginaire (YZ), et le troisième tube de mesure (18₃) et le quatrième tube de mesure (18₄) en vibrations de flexion diamétralement opposées par rapport au deuxième plan en coupe longitudinal imaginaire (YZ), notamment symétriques par rapport au deuxième plan en coupe longitudinal imaginaire (YZ) ; et/ou
- pour lequel le circuit d'excitation est conçu de telle sorte à ce qu'il permette d'exciter le premier tube de mesure (18₁) et le troisième tube de mesure (18₃) en vibrations de flexion diamétralement opposées par rapport au deuxième plan en coupe longitudinal imaginaire (YZ), notamment symétriques par rapport au deuxième plan en coupe longitudinal imaginaire (YZ), et le deuxième tube de mesure (18₂) et le quatrième tube de mesure (18₄) en vibrations de flexion diamétralement opposées par rapport au deuxième plan en coupe longitudinal imaginaire (YZ), notamment symétriques par rapport au deuxième plan en coupe longitudinal imaginaire (YZ).

3. Capteur selon l'une des revendications précédentes,
- pour lequel l'agencement de tubes présente un mode de vibration de flexion naturel de second type (mode X),
-- en ce que le premier tube de mesure (18₁) et le deuxième tube de mesure (18₂) exécutent par rapport au deuxième plan en coupe longitudinal imaginaire (YZ) des vibrations de flexion diamétralement opposées, notamment symétriques par rapport au deuxième plan en coupe longitudinal imaginaire (YZ), autour d'une position de repos statique associée au tube de mesure respectif, et
-- en ce que le troisième tube de mesure (18₃) et le quatrième tube de mesure (18₄) exécutent par rapport au deuxième plan en coupe longitudinal imaginaire (YZ) des vibrations de flexion diamétralement opposées, notamment symétriques par rapport au deuxième plan en coupe longitudinal imaginaire (YZ), autour d'une position de repos statique associée au tube de mesure respectif, de telle sorte
--- que, par rapport au deuxième plan en coupe longitudinal imaginaire (YZ), les vibrations de flexion du premier tube de mesure (18₁) sont également diamétralement opposées aux vibrations du quatrième tube de mesure (18₄), et
--- que, par rapport au deuxième plan en coupe longitudinal imaginaire (YZ), les vibrations de flexion du deuxième tube de mesure (18₂) sont également diamétralement opposées aux vibrations du troisième tube de mesure (18₃).

4. Capteur selon la revendication précédente, pour lequel le circuit d'excitation est conçu de telle sorte à ce qu'il permette d'exciter le mode de vibration de flexion de second type, notamment simultanément avec le mode de vibration de flexion de premier type.

5. Capteur selon l'une des revendications précédentes, pour lequel les deux diviseurs d'écoulement (20₁, 20₂) sont conçus et disposés dans le capteur de telle sorte qu'un premier plan en coupe longitudinal imaginaire (XZ₁) du capteur, à l'intérieur duquel s'étendent le premier axe de liaison imaginaire (Z₁) et le deuxième axe de liaison imaginaire (Z₂), est parallèle à un deuxième plan en coupe longitudinal imaginaire (XZ₂) du capteur, à l'intérieur duquel s'étendent le troisième axe de liaison imaginaire (Z₃) et le quatrième axe de liaison imaginaire (Z₄), notamment de telle sorte que le premier plan en coupe longitudinal imaginaire (XZ) de l'agencement de tubes se situe entre le premier et le deuxième plan en coupe longitudinal imaginaire (XZ₁, XZ₂) du capteur, et/ou est parallèle au premier et au deuxième plan en coupe longitudinal imaginaire (XZ₁, XZ₂) du capteur.

6. Capteur selon la revendication précédente, pour lequel les deux diviseurs d'écoulement (20₁, 20₂) sont conçus et disposés dans le capteur de telle sorte qu'un troisième plan en coupe longitudinal imaginaire (YZ₁) du capteur, à l'intérieur duquel s'étendent le premier axe de liaison imaginaire (Z₁) et le troisième axe de liaison imaginaire (Z₃), est parallèle à un quatrième plan en coupe longitudinal imaginaire (YZ₂) du capteur, à l'intérieur duquel s'étendent le deuxième axe de liaison imaginaire (Z₂) et le quatrième axe de liaison imaginaire (Z₄).

7. Capteur selon la revendication précédente, pour lequel les tubes de mesure sont conçus et disposés dans le capteur de telle sorte que le deuxième plan en coupe longitudinal imaginaire (YZ) de l'agencement de tubes s'étend entre le troisième plan en coupe longitudinal imaginaire (YZ₁) du capteur et du quatrième plan en couple longitudinal imaginaire (YZ₂) du capteur, notamment de telle sorte que le deuxième plan en coupe longitudinal imaginaire (YZ) de l'agencement de tubes est parallèle au troisième plan en coupe longitudinal imaginaire (YZ₁) du capteur et parallèle au quatrième plan en coupe longitudinal imaginaire (YZ₂) du capteur.

8. Capteur selon l'une des revendications précédentes, pour lequel chacun des quatre tubes de mesure (18₁, 18₂, 18₃, 18₄) présente un sommet de tube de mesure, lequel est défini comme distance perpendiculaire maximale du tube de mesure respectif par rapport au plan en coupe longitudinal imaginaire (XZ).

9. Capteur selon l'une des revendications précédentes, pour lequel l'agencement de tubes présente un plan en coupe transversal imaginaire (XY) à la fois par rapport au premier plan en coupe longitudinal imaginaire (XZ) et au deuxième plan en coupe longitudinal imaginaire (YZ).

10. Capteur selon la revendication précédente,
- pour lequel un centre de gravité de l'agencement de tubes se situe dans le plan en coupe transversal imaginaire (XY) ;
et/ou
- pour lequel l'agencement de tubes est en symétrie spéculaire par rapport au plan en coupe transversal imaginaire (XY) ; et/ou
- pour lequel chacun des quatre tubes de mesure (18₁, 18₂, 18₃, 18₄) présente un sommet de tube de mesure, défini comme distance perpendiculaire maximale du tube de mesure respectif par rapport au premier plan en coupe longitudinal imaginaire (XZ), et coupe le plan en coupe transversal imaginaire (XY) de chacun des quatre tubes de mesure (18₁, 18₂, 18₃, 18₄) en son sommet de tube de mesure respectif.

11. Capteur selon l'une des revendications précédentes, comprenant en outre
- un premier élément de couplage (24₁) de premier type, fixé sur le côté entrée de chacun des quatre tubes de mesure à distance à la fois du premier diviseur de débit et du second diviseur de débit, lequel élément de couplage est destiné à régler les fréquences propres des modes de vibration naturels de l'agencement de tubes, ainsi que
- un deuxième élément de couplage (24₂) de premier type, fixé sur le côté sortie de chacun des quatre tubes de mesure à distance à la fois du premier diviseur de débit et du deuxième diviseur de débit, lequel élément de couplage est destiné à régler les fréquences propres des modes de vibration naturels de l'agencement de tubes.

12. Capteur selon la revendication précédente, pour lequel à la fois le premier élément de couplage (24₁) de premier type et le deuxième élément de couplage (24₂) de premier type sont formés respectivement d'éléments partiels en forme de plaque.

13. Capteur selon l'une des revendications 11 à 12, comprenant en outre :
- un premier élément de couplage (25₁) de second type, notamment en forme de plaque, lequel premier élément de couplage est fixé côté entrée sur le premier tube de mesure (18₁) et sur le deuxième tube de mesure (18₂), pour la formation de nœuds de vibration côté entrée à la fois pour des vibrations, notamment des vibrations de flexion, du premier tube de mesure (18₁), et pour des vibrations diamétralement opposées, notamment des vibrations de flexion, du deuxième tube de mesure (18₂) ;
- un deuxième élément de couplage (25₂) de second type, notamment en forme de plaque, lequel deuxième élément de couplage est fixé côté entrée sur le premier tube de mesure (18₁) et sur le deuxième tube de mesure (18₂), pour la formation de nœuds de vibration côté entrée à la fois pour des vibrations, notamment des vibrations de flexion, du premier tube de mesure (18₁), et pour des vibrations diamétralement opposées, notamment des vibrations de flexion, du deuxième tube de mesure (18₂) ;
- un troisième élément de couplage (25₃) de second type, notamment en forme de plaque, lequel troisième élément de couplage est fixé côté entrée sur le troisième tube de mesure (18₃) et sur le quatrième tube de mesure (18₄), pour la formation de nœuds de vibration côté entrée à la fois pour des vibrations, notamment des vibrations de flexion, du troisième tube de mesure (18₃), et pour des vibrations diamétralement opposées, notamment des vibrations de flexion, du quatrième tube de mesure (18₄) ; ainsi que
- un quatrième élément de couplage (25₄) de second type, notamment en forme de plaque, lequel quatrième élément de couplage est fixé côté entrée sur le troisième tube de mesure (18₃) et sur le quatrième tube de mesure (18₄), pour la formation de nœuds de vibration côté entrée à la fois pour des vibrations, notamment des vibrations de flexion, du troisième tube de mesure (18₃), et pour des vibrations diamétralement opposées, notamment des vibrations de flexion, du quatrième tube de mesure (18₄).

14. Capteur selon la revendication précédente
- pour lequel le premier élément de couplage (25₁) de second type est fixé à la fois sur un segment de tube du premier tube de mesure (18₁) s'étendant entre le premier diviseur d'écoulement (20₁) et le premier élément de couplage (24₁) de premier type et sur un segment de tube du deuxième tube de mesure (18₂) s'étendant entre le premier diviseur d'écoulement (20₁) et le premier élément de couplage (24₁) de premier type ;
- pour lequel le deuxième élément de couplage (25₂) de second type est fixé à la fois sur un segment de tube du premier tube de mesure (18₁) s'étendant entre le deuxième diviseur d'écoulement (20₂) et le deuxième élément de couplage (24₂) de premier type et sur un segment de tube du deuxième tube de mesure (18₂) s'étendant entre le deuxième diviseur d'écoulement (20₂) et le deuxième élément de couplage (24₂) de premier type ;
- pour lequel le troisième élément de couplage (25₃) de second type est fixé à la fois sur un segment de tube du troisième tube de mesure (18₃) s'étendant entre le premier diviseur d'écoulement (20₁) et le premier élément de couplage (24₁) de premier type et sur un segment de tube du quatrième tube de mesure (18₄) s'étendant entre le premier diviseur d'écoulement (20₁) et le premier élément de couplage (24₁) de premier type ;
- pour lequel le quatrième élément de couplage (25₄) de second type est fixé à la fois sur un segment de tube du troisième tube de mesure (18₃) s'étendant entre le deuxième diviseur d'écoulement (20₂) et le deuxième élément de couplage (24₂) de premier type et sur un segment de tube du quatrième tube de mesure (18₄) s'étendant entre le deuxième diviseur d'écoulement (20₂) et le deuxième élément de couplage (24₂) de premier type ;

15. Capteur selon l'une des revendications 13 à 14,
- pour lequel une longueur de vibration utile, L₁₈ₓ, du premier tube de mesure (18₁), notamment de chacun des tubes de mesure (18₁, 18₂, 18₃, 18₄), correspondant à une longueur d'une section de la ligne de flexion s'étendant entre le premier élément de couplage (25₁) de second type et le deuxième élément de couplage (25₂) de second type, est inférieure à 3 000 mm, notamment inférieure à 2 500 mm et/ou supérieure à 800 mm, et
- pour lequel un rapport calibre à longueur de vibration, D₁₈/L₁₈, du capteur, défini par un rapport entre le calibre, D₁₈, du premier tube de mesure (18₁) et la longueur de vibration utile, L₁₈ₓ, du premier tube de mesure (18₁), est supérieur à 0,03, notamment supérieur à 0,05 et/ou inférieur à 0,15.

16. Capteur selon l'une des revendications précédentes, pour lequel un segment médian (7_{1A}) du boîtier de capteur (7₁) est formé au moins partiellement au moyen d'un tube support droit, notamment cylindrique circulaire.

17. Capteur selon l'une des revendications précédentes,
- pour lequel chacun des quatre tubes de mesure (18₁, 18₂, 18₃, 18₄), notamment de taille égale, présentent un calibre, D₁₈, qui est supérieur à 40 mm, notamment supérieur à 60 mm, et
- pour lequel les tubes de mesure (18₁, 18₂, 18₃, 18₄) sont coudés et disposés de telle sorte qu'un rapport calibre à hauteur, D₁₈/Q₁₈, de l'agencement de tubes, défini par un rapport entre le calibre, D₁₈, du premier tube de mesure et une extension latérale maximale, Q₁₈, de l'agencement de tubes, mesurée d'un sommet du premier tube de mesure (18₁) à un sommet du troisième tube de mesure (18₃), est supérieur à 0,05, notamment supérieur à 0,07 et/ou inférieur à 0,35, notamment inférieur à 0,2.

18. Capteur selon l'une des revendications précédentes,
- pour lequel l'arrangement de capteurs (19) est formé au moyen d'un premier capteur de vibration (19₁) côté entrée ainsi que d'un deuxième capteur de vibration (19₂) côté sortie, et
- pour lequel l'arrangement de capteurs (19) est formé au moyen d'un troisième capteur de vibration (19₃) côté entrée ainsi que d'un quatrième capteur de vibration (19₄) côté sortie.

19. Capteur selon la revendication précédente,
- pour lequel le premier et le troisième capteur de vibration (19₁, 19₃) sont couplés électriquement en série de telle sorte qu'un signal de vibration commun représente des vibrations communes, côté entrée, du premier et du troisième tube de mesure (18₁, 18₃) par rapport au deuxième et au quatrième tube de mesure (18₂, 18₄), et
- pour lequel le deuxième et le quatrième capteur de vibration (19₂, 19₄) sont couplés électriquement en série de telle sorte qu'un signal de vibration commun représente des vibrations communes, côté sortie, du premier et du troisième tube de mesure (18₁, 18₃) par rapport au deuxième et au quatrième tube de mesure (18₂, 18₄).

20. Capteur selon l'une des revendications précédentes, pour lequel un matériau, à partir duquel les parois des quatre tubes de mesure (18₁, 18₂, 18₃, 18₄) sont constituées, est au moins partiellement de l'inox.

21. Capteur selon l'une des revendications 1 à 19, pour lequel le boîtier de capteur (7₁), les diviseurs d'écoulement (20₁, 20₂) et les parois des tubes de mesure (18₁, 18₂, 18₃, 18₄) sont constitués d'un acier, notamment d'un acier inoxydable ou d'un acier haute résistance.

22. Système de mesure destiné à la mesure d'une densité et/ou d'un débit massique d'un produit s'écoulant au moins temporairement dans une conduite, lequel système de mesure comprend un capteur selon l'une des revendications 1 à 21 ainsi qu'une électronique de transmetteur couplée électriquement avec le capteur et destinée à la commande du capteur et à l'exploitation des signaux de vibration délivrés par le capteur.

23. Système de mesure selon la revendication 22, pour lequel l'électronique de transmetteur génère, au moyen des signaux de vibration délivrés par le capteur, une valeur mesurée de débit massique représentant le débit massique du produit en écoulement et/ou une valeur mesurée de densité représentant le produit en écoulement.

24. Système de mesure selon l'une des revendications 22 à 23, pour lequel le circuit d'excitation (5) comprend au moins un premier excitateur de vibration (5₁) agissant, notamment de façon différentielle, sur le premier et le deuxième tube de mesure (18₁, 18₂), lequel premier excitateur de vibration est destiné à la conversion au moyen de l'électronique de transmetteur (12) de la puissance d'excitation électrique injectée dans le circuit d'excitation (5) en vibrations de flexion du premier tube de mesure (18₁) et en forces d'excitation mécaniques provoquant des vibrations de flexion du deuxième tube de mesure (18₂), lesquelles sont diamétralement opposées à celles provoquant des vibrations de flexion du premier tube de mesure (18₁) par rapport au deuxième plan en coupe longitudinal imaginaire (YZ) de l'agencement de tubes.

25. Système de mesure selon la revendication 24, pour lequel le circuit d'excitation (5) comprend en outre un deuxième excitateur de vibration (5₂) agissant sur le troisième et le quatrième tube de mesure (18₃, 18₄) et qui est notamment de conception identique au premier excitateur de vibration (5₁), lequel deuxième excitateur de vibration est destiné à la conversion au moyen de l'électronique de transmetteur (12) de la puissance d'excitation électrique injectée dans le circuit d'excitation (5) en vibrations de flexion du troisième tube de mesure (18₃) et en forces d'excitation mécaniques provoquant des vibrations de flexion du quatrième tube de mesure (18₄), lesquelles sont diamétralement opposées à celles provoquant des vibrations de flexion du troisième tube de mesure (18₃) par rapport au deuxième plan en coupe longitudinal imaginaire (YZ) de l'agencement de tubes.

26. Système de mesure selon l'une des revendications 22 à 25,
- pour lequel l'électronique de transmetteur (12) alimente le circuit d'excitation avec une puissance d'excitation électrique au moyen d'au moins un signal d'attaque électrique acheminé au circuit d'excitation, notamment avec au moins une fréquence de signal correspondant à une fréquence propre d'un mode de vibration naturel de l'agencement de tubes, laquelle fréquence de signal est variable et/ou au moins temporairement périodique, lequel signal d'attaque présente notamment un niveau de tension maximum variable et/ou une intensité de courant maximum variable ; et
- pour lequel le circuit d'excitation convertit la puissance d'excitation électrique, dépendant d'une valeur de tension et d'une intensité de courant de l'au moins un signal d'attaque, au moins partiellement à la fois en vibrations de flexion du premier tube de mesure (18₁) et en vibrations de flexion du deuxième tube de mesure (18₂), lesquelles sont diamétralement opposées aux vibrations de flexion du premier tube de mesure (18₁) par rapport au deuxième plan en coupe longitudinal imaginaire (YZ) de l'arrangement de tubes, et également en vibrations de flexion du troisième tube de mesure (18₃) et en vibrations de flexion du quatrième tube de mesure (18₄), lesquelles sont diamétralement opposées aux vibrations de flexion du troisième tube de mesure (18₃) par rapport au deuxième plan en coupe longitudinal imaginaire (YZ) de l'arrangement de tubes.

27. Système de mesure selon la revendication 26,
- pour lequel l'au moins un signal d'attaque présente un grand nombre de composantes de signal dont les fréquences sont différentes les unes des autres, et
- pour lequel au moins l'une des composantes de signal, notamment une composante de signal dominante par rapport à une puissance de signal, du premier signal d'attaque présente une fréquence de signal correspondant à une fréquence propre d'un mode de vibration naturel de l'arrangement de tubes, notamment du mode de vibration de flexion de premier type, dans lequel chacun des quatre tubes de mesure (18₁, 18₂, 18₃, 18₄) exécute des vibrations de flexion.

28. Utilisation d'un capteur selon l'une des revendications 1 à 21 ou d'un système de mesure selon l'une des revendications 22 à 27, destiné à mesurer un débit massique d'un produit s'écoulant dans une conduite de process au moins temporairement avec un débit massique supérieur à 1 000 t/h.
